# EUROPEAN PATENT APPLICATION

(11) **EP 4 707 364 A2**
(43) Date of publication of application: **11.03.2026**
(21) Application number: 26153936.5
(22) Date of filing: 23.03.2022
(51) Int. Cl.: C11C 3/10

(54) **FAT COMPOSITION, FAT BLEND AND WATER-IN-OIL EMULSION**

(30) Priority: 24.03.2021 EP 21164710
(62) Divisional of application: 22716962.0
(71) Applicant: Bunge SA, 1206 Geneva (CH)
(72) Inventor: DONG, Jiajia, 1521AZ Wormerveer (NL); MA, Jun, 1506MA Zaandam (NL); MULDER, Hendrikus, 1521AZ Wormerveer (NL); PIISPA, Eija Marjatta, 21200 Raisio (FI); SIEKER, Ina, 32257 Bünde (DE)
(74) Representative: Potter Clarkson

(57) **Abstract**

The invention relates to a fat composition comprising at least 30% by weight of stearic acid (C18:0); and at least 45% by weight of saturated fatty acid (SAFA); and wherein the fat composition comprises from 1.0% to 8.0% by weight of SSS triglycerides; and at most 10.0% by weight of UUU triglycerides and has a weight ratio of S2U triglycerides to SSS triglycerides from 6.0 to 20.0 and a weight ratio of S2O triglycerides to S2L triglycerides at most 30.0; wherein S is saturated fatty acid, U is unsaturated fatty acid, O is oleic acid and L is linoleic acid. The invention also relates to a fat blend including the fat composition as hardstock where the fat blend is further used in a water-in-oil emulsion product, such as margarine or spread.

## Description

This invention relates to a fat composition, a fat blend, a water-in-oil emulsion, use of the water-in-oil emulsion, a process of making the fat composition and a process of preparing the water-in-oil emulsion.

### Background

Fats and oils are important ingredients of food products and used extensively in the food industry. Fats and oils are used for example in a water-in-oil emulsion such as margarine or spread which comprises a fat phase which is the continuous phase and an aqueous phase which is the dispersed phase that is distributed into the continuous phase.

The water phase in general comprises water, milk, milk protein, milk powder, plant milk, salt, preservatives, flavors, pH regulation agents and colorants. The fat phase, also designated as fat blend, generally comprises liquid or semi-liquid oils or fats and a structure-forming fat composition which is also commonly named as hardstock. The properties of the structure-forming fat composition in the fat blend strongly influence the structure, the texture and the organoleptic properties of the water-in-oil emulsion such as margarine or spread. In addition, mono- and diglyceride, distilled monoglyceride and lecithin are commonly used in such water-in-oil emulsion as emulsifier.

EP-A-3 100 613 relates to the use of a shea stearin as a texturizing agent in water-in-oil emulsions. WO 2015/110388 also relates to using shea stearin in a margarine or spread. However, it is generally known that the use of the fats such as shea stearin, shea butter or cocoa butter as such without any modification in the fat blend has significant post-crystallization effect in margarine or spread causing undesirable hardness, poor spreadability and texture during storage and use.

EP-A-3 245 876 discloses a spreadable food composition comprising interesterified cocoa butter as hardstock. However, it is observed that by using such completely interesterified hardstock, the margarine product will have undesirable brittleness, irregular structure and even graininess tendency, which eventually result in poor spreadability and organoleptic properties.

EP-A-3 466 278 discloses an oil-in-water food emulsion such as whipping cream using cocoa butter and interesterified cocoa butter. Oil-in-water emulsions such as whipped cream relate to a different technical field that water-in-oil emulsions such as margarine or spread.

WO 2019/020714 relates to a non-hydrogenated fat composition derived from shea butter and shea olein that is used in confectionery products or shortening for puff pastry applications. However, there is no disclosure relating to a water-in-oil emulsion product.

WO 2019/166598 discloses a high stearic oilseed stearin fat and a process for preparing it. However, it merely provides a methodology to provide a solid stearin with increased levels of di- and trisaturated triglyceride, stearic acids, arachidic acids and behenic acids. There is no disclosure relating to a water-in-oil emulsion product.

There remains a need for a fat composition and a fat blend suitable to be used in a spreadable water-in-oil emulsion such as margarine or spread, having improved appearance, desirable texture and hardness and excellent organoleptic properties while unpleasant brittleness, graininess tendency, irregular structure, poor spreadability and undesirable post-hardening are largely limited and suppressed.

### Description of the invention

According to the present invention, there is provided a fat composition comprising: at least 30% by weight of stearic acid (C18:0); and at least 45% by weight of saturated fatty acid (SAFA); said percentages of acid referring to acids bound as acyl groups in glycerides in the fat composition and being based on the total weight of C8 to C24 fatty acids; and wherein the fat composition comprises from 1.0% to 8.0% by weight of SSS triglycerides and at most 10.0% by weight of UUU triglycerides, based on the total triglycerides present in the fat composition; and wherein the fat composition has a weight ratio of S2U triglycerides to SSS triglycerides from 6.0 to 20.0 and a weight ratio of S2O triglycerides to S2L triglycerides at most 30.0, wherein S is saturated fatty acid, U is unsaturated fatty acid, O is oleic acid and L is linoleic acid.

The fat composition of the invention has been found to be particularly useful for producing a fat blend for use in a water-in-oil emulsion such as margarine or spread having improved appearance and good sensory properties. In particular, it is believed that due to the triglyceride composition as defined in the fat composition of the invention, the spreadable water-in-oil emulsion products using the fat composition and fat blend according to the invention typically have significantly reduced undesirable brittleness, limited graininess tendency but desirable hardness and excellent spreadability.

The term "fat" refers to glyceride fats and oils containing fatty acid acyl groups and does not imply any particular melting point. The term "oil" is used synonymously with "fat".

The term "triglyceride" refers to glycerides consisting of three fatty acid chains covalently bonded to a glycerol molecule. Amounts of triglycerides specified herein are percentages by weight based on total triglycerides present in the fat composition, unless otherwise stated. The notation triglyceride XYZ denotes triglycerides having fatty acid acyl groups X, Y and Z at any of the 1-, 2- and 3-positions of the triglyceride. The notation A2B includes both AAB and ABA, and AB2 includes both ABB and BAB. Triglyceride composition may be determined for example by GC (ISO 23275).

The term "SSS" refers to trisaturated triglycerides where the triglycerides contain three saturated fatty acids. The term "UUU" refers to triunsaturated triglycerides where the triglycerides contain three unsaturated fatty acids. The term "S2U" refers to disaturated-monounsaturated triglyceride where the triglycerides contains two saturated fatty acids and one unsaturated fatty acid at any of the 1-, 2- and 3- positions of the triglyceride, thus regardless their positions in the triglyceride. The term "SU2" refers to monosaturated-diunsaturated triglyceride where the triglycerides contains one saturated fatty acid and two unsaturated fatty acids at any of the 1-, 2- and 3- positions of the triglyceride, thus regardless their positions in the triglyceride. The term "S2O" refers to monooleate-disaturated triglyceride where the triglycerides contains two saturated fatty acids and one oleic acid at any of the 1-, 2- and 3- positions of the triglyceride, thus regardless their positions in the triglyceride. The term "S2L" refers to monolinoleate-disaturated triglyceride where the triglycerides contains two saturated fatty acids and one linoleic acid at any of the 1-, 2- and 3- positions of the triglyceride, thus regardless their positions in the triglyceride. Herein S is saturated fatty acid, U is unsaturated fatty acid, O is oleic acid and L is linoleic acid.

The term "fatty acid" refers to straight chain saturated or unsaturated (including mono- and poly unsaturated) carboxylic acids having from 8 to 24 carbon atoms. A fatty acid having x carbon atoms and y double bonds may be denoted Cx:y. For example, palmitic acid may be denoted C16:0 and oleic acid may be denoted C18:1. The fatty acid profile may be determined by fatty acid methyl ester analysis (FAME) using gas chromatography according to ISO 12966-2 and ISO 12966-4. Thus, percentages of fatty acids in compositions (e.g. palmitic acid (C16:0), stearic acid (C18:0), oleic acid (C18:1) etc.) referred to herein include both acyl groups such as tri-, di- and mono- glycerides and free fatty acids and are based on the total weight of C8 to C24 fatty acid residues.

The fat composition according to the invention may be made from naturally occurring or synthetic fats, fractions of naturally occurring or synthetic fats, or mixtures thereof, that satisfy the requirements defined herein. Preferably, the fat composition is, or is derived from, one or more vegetable fats or animal fats. More preferably, the fat composition is, or is derived from, one or more vegetable fats. It is also preferred that the fat composition according to the invention is, or is derived from non-hydrogenated fats. The term "non-hydrogenated" means that the fat composition is not prepared from a fat that has been subjected to hydrogenation to convert unsaturated fatty acyl groups to saturated fatty acyl groups.

The term "SN-2 of SAFA%" refers to the percentage of saturated fatty acid (SAFA) present at the 2-position of the triglyceride in comparison to the percentage of saturated fatty acid (SAFA) in the fat sample. The distribution of fatty acids in triglyceride may be determined based on joint JOCS/AOCS official method Ch 3a-19. It may also be determined after chemical degradation with a Grignard reagent as well known in the art. The percentage of SAFA residues at the 2-position is determined by finding: (a) the total SAFA content of the fat sample by GC-FAME (ISO 12966-2 and ISO 12966-4); and (b) the SAFA content of the 2-position by GC-FAME (ISO 12966-2 and ISO 12966-4) in 2-monoglyceride after the transesterification reaction of triacylglycerols with ethanol by immobilized lipase and the isolation with preparative straight phase HPLC. The Sn-2 of SAFA% is thus ((b) x 100)/((a) x 3) %.

The fat composition according to the invention preferably has a percentage of saturated fatty acid at the second position of triglyceride out of total saturated fatty acid (Sn-2 of SAFA%) of from 6.0% to 25.0%, more preferably from 6.0% to 22.0%, even more preferably from 6.5% to 20.0% and most preferably from 7.0% to 19.0%.

The fat composition of the invention preferably comprises at most 5% by weight of lauric acid (C12:0), more preferably from 0% to 4% by weight, even more preferably from 0% to 3% by weight and most preferably from 0% to 2% by weight; said percentage of acid referring to acids bound as acyl groups in glycerides in the fat composition and being based on the total weight of C8 to C24 fatty acids.

The fat composition of the invention preferably comprises at most 30% by weight of palmitic acid (C16:0), more preferably from 0% to 29% by weight, even more preferably from 1% to 28% by weight and most preferably from 2% to 27% by weight; said percentage of acid referring to acids bound as acyl groups in glycerides in the fat composition and being based on the total weight of C8 to C24 fatty acids.

The fat composition of the invention comprises at least 30% by weight of stearic acid (C18:0), preferably from 30% to 60% by weight, more preferably from 31% to 55% by weight, even more preferably from 32% to 52% by weight and most preferably from 33% to 50% by weight; said percentage of acid referring to acids bound as acyl groups in glycerides in the fat composition and being based on the total weight of C8 to C24 fatty acids.

The fat composition of the invention preferably comprises from 20% to 55% by weight of oleic acid (C18:1), more preferably from 23% to 53% by weight, even more preferably from 25% to 50% by weight and most preferably from 28% to 48%; said percentage of acid referring to acids bound as acyl groups in glycerides in the fat composition and being based on the total weight of C8 to C24 fatty acids.

The fat composition of the invention comprises at least 45% by weight of saturated fatty acid (SAFA), preferably from 45% to 80% by weight, more preferably from 45% to 75% by weight, even more preferably from 45% to 70% by weight and most preferably from 46% to 65%; said percentage of acid referring to acids bound as acyl groups in glycerides in the fat composition and being based on the total weight of C8 to C24 fatty acids.

In a preferred embodiment, the fat composition according to the invention comprises at most 5% by weight of lauric acid (C12:0); at most 30% by weight of palmitic acid (C16:0); from 30% to 60% by weight of stearic acid (C18:0); from 20% to 55% by weight of oleic acid (C18:1); and from 45% to 80% by weight saturated fatty acid (SAFA); said percentages of acid referring to acids bound as acyl groups in glycerides in the fat composition and being based on the total weight of C8 to C24 fatty acids; and has a percentage of saturated fatty acid on the second position of triglyceride out of total saturated fatty acid (SN-2 of SAFA) of from 6.0% to 25.0%.

In a more preferred embodiment, the fat composition according to the invention comprises from 0% to 4% by weight of lauric acid (C12:0); from 0% to 29% by weight of palmitic acid (C16:0); from 31% to 55% by weight of stearic acid (C18:0); from 23% to 53% by weight of oleic acid (C18: 1); and from 45% to 75% by weight saturated fatty acid (SAFA); said percentages of acid referring to acids bound as acyl groups in glycerides in the fat composition and being based on the total weight of C8 to C24 fatty acids; and has a percentage of saturated fatty acid on the second position of triglyceride out of total saturated fatty acid (SN-2 of SAFA) of from 6.0% to 22.0%.

In an even more preferred embodiment, the fat composition according to the invention comprises from 0% to 3% by weight of lauric acid (C12:0); from 1% to 28% by weight of palmitic acid (C16:0); from 32% to 52% by weight of stearic acid (C18:0); from 25% to 50% by weight of oleic acid (C18:1); and from 45% to 70% by weight saturated fatty acid (SAFA); said percentages of acid referring to acids bound as acyl groups in glycerides in the fat composition and being based on the total weight of C8 to C24 fatty acids; and has a percentage of saturated fatty acid on the second position of triglyceride out of total saturated fatty acid (SN-2 of SAFA) of from 6.0% to 20.0%.

In a most preferred embodiment, the fat composition according to the invention comprises from 0% to 3% by weight of lauric acid (C12:0); from 1% to 28% by weight of palmitic acid (C16:0); from 32% to 52% by weight of stearic acid (C18:0); from 25% to 50% by weight of oleic acid (C18:1); and from 45% to 70% by weight saturated fatty acid (SAFA); said percentages of acid referring to acids bound as acyl groups in glycerides in the fat composition and being based on the total weight of C8 to C24 fatty acids; and has a percentage of saturated fatty acid on the second position of triglyceride out of total saturated fatty acid (SN-2 of SAFA) of from 6.0% to 20.0%.

The fat composition according to the invention preferably has a content of trans fatty acid residues of less than 2% by weight, more preferably less than 1.5% by weight and even more preferably less than 1.0% by weight; said percentage of acid referring to acids bound as acyl groups in glycerides in the fat composition and being based on the total weight of C8 to C24 fatty acids.

The fat composition according to the invention preferably has an iodine value of from 25 to 60, more preferably from 28 to 55, even more preferably from 30 to 53 and most preferably from 31 to 52. The term "iodine value" refers to the number of grams of iodine that could be added to 100g of oil. Iodine value may be calculated according to AOCS Cd 1c-85 based on total acids bound as acyl groups in glycerides in the fat composition being based on the total weight of C8 to C24 fatty acids. Iodine value may alternatively be measured by AOCS Method Cd 1-25.

The fat composition according to the invention comprises from 1.0% to 8.0% by weight of SSS triglycerides, preferably from 1.5% to 7.5% by weight, more preferably from 2.0% to 7.0% by weight, even more preferably from 2.3% to 6.8% by weight and most preferably from 2.5% to 6.5% by weight; based on the total triglycerides present in the fat composition, wherein S is saturated fatty acid.

The fat composition according to the invention comprises at most 10.0% by weight of UUU triglycerides, preferably from 0.1% to 9.9% by weight, more preferably from 0.2% to 9.8% by weight, even more preferably from 0.3% to 9.7% by weight and most preferably from 0.5% to 9.5% by weight; based on the total triglycerides present in the fat composition, wherein U is unsaturated fatty acid.

The fat composition according to the invention preferably comprises from 20.0% to 95.0% by weight of S2U triglycerides, more preferably from 25.0% to 90.0% by weight, even more preferably from 30.0% to 88.0% by weight and most preferably from 35.0% to 85.0% by weight; based on the total triglycerides present in the fat composition, wherein S is saturated fatty acid and U is unsaturated fatty acid.

The fat composition according to the invention preferably comprises from 2.0% to 50.0% by weight of SU2 triglycerides, more preferably from 4.0% to 45.0% by weight, even more preferably from 5.0% to 42.0% by weight and most preferably from 6.0% to 41.0% by weight; based on the total triglycerides present in the fat composition, wherein S is saturated fatty acid and U is unsaturated fatty acid.

The fat composition according to the invention has a weight ratio of S2U triglycerides to SSS triglycerides from 6.0 to 20.0, preferably from 6.5 to 19.0, more preferably from 6.5 to 18.0, even more preferably from 7.0 to 17.0 and most preferably from 7.0 to 16.0; based on the total triglycerides present in the fat composition, wherein S is saturated fatty acid and U is unsaturated fatty acid.

The fat composition according to the invention preferably comprises from 30.0% to 85.0% by weight of S2O triglycerides, more preferably from 32.0% to 82.0% by weight, even more preferably from 35.0% to 80.0% by weight and most preferably from 38.0% to 80.0 by weight; based on the total triglycerides present in the fat composition, wherein S is saturated fatty acid and O is oleic acid.

The fat composition according to the invention preferably comprises from 0.0% to 20.0% by weight of S2L triglycerides, more preferably from 1.0% to 15.0% by weight, even more preferably from 2.0% to 12.0% by weight and most preferably from 3.0% to 10.0% by weight; based on the total triglycerides present in the fat composition, wherein S is saturated fatty acid and L is linoleic acid.

The fat composition according to the invention has a weight ratio of S2O triglycerides to S2L triglycerides of at most 30.0, preferably from 1.0 to 25.0, more preferably from 1.5 to 20.0, even more preferably from 2.0 to 18.0 and most preferably from 2.5 to 15.0; based on the total triglycerides present in the fat composition, wherein S is saturated fatty acid, O is oleic acid and L is linoleic acid.

In a preferred embodiment, the fat composition according to the invention comprises from 1.5% to 7.5% by weight of SSS triglycerides; from 0.1% to 9.9% by weight of UUU triglycerides; from 20.0% to 95.0% by weight of S2U triglycerides; from 2.0% to 50.0% by weight of SU2 triglycerides; from 30.0% to 85.0% by weight of S2O triglycerides; and from 0.0% to 20.0% by weight of S2L triglycerides; and has a weight ratio of S2U triglycerides to SSS triglycerides from 6.5 to 19.0 and a weight ratio of S2O triglycerides to S2L from 1.0 to 25.0; based on the total triglycerides present in the fat composition, wherein S is saturated fatty acid, U is unsaturated fatty acid, O is oleic acid and L is linoleic acid.

In a more preferred embodiment, the fat composition according to the invention comprises from 2.0% to 7.0% by weight of SSS triglycerides; from 0.2% to 9.8% by weight of UUU triglycerides; from 25.0% to 90.0% by weight of S2U triglycerides; from 4.0% to 45.0% by weight of SU2 triglycerides; from 32.0% to 82.0% by weight of S2O triglycerides; and from 1.0% to 15.0% by weight of S2L triglycerides; and has a weight ratio of S2U triglycerides to SSS triglycerides from 6.5 to 18.0 and a weight ratio of S2O triglycerides to S2L from 1.5 to 20.0; based on the total triglycerides present in the fat composition, wherein S is saturated fatty acid, U is unsaturated fatty acid, O is oleic acid and L is linoleic acid.

In an even more preferred embodiment, the fat composition according to the invention comprises from 2.3% to 6.8% by weight of SSS triglycerides; from 0.3% to 9.7% by weight of UUU triglycerides; from 30.0% to 88.0% by weight of S2U triglycerides; from 5.0% to 42.0% by weight of SU2 triglycerides; from 35.0% to 80.0% by weight of S2O triglycerides; and from 2.0% to 12.0% by weight of S2L triglycerides; and has a weight ratio of S2U triglycerides to SSS triglycerides from 7.0 to 17.0 and a weight ratio of S2O triglycerides to S2L from 2.0 to 18.0; based on the total triglycerides present in the fat composition, wherein S is saturated fatty acid, U is unsaturated fatty acid, O is oleic acid and L is linoleic acid.

In a most preferred embodiment, the fat composition according to the invention comprises from 2.5% to 6.5% by weight of SSS triglycerides; from 0.5% to 9.5% by weight of UUU triglycerides; from 35.0% to 85.0% by weight of S2U triglycerides; from 6.0% to 41.0% by weight of SU2 triglycerides; from 38.0% to 80.0% by weight of S2O triglycerides; and from 3.0% to 10.0% by weight of S2L triglycerides; and has a weight ratio of S2U triglycerides to SSS triglycerides from 7.0 to 16.0 and a weight ratio of S2O triglycerides to S2L from 2.5 to 15.0; based on the total triglycerides present in the fat composition, wherein S is saturated fatty acid, U is unsaturated fatty acid, O is oleic acid and L is linoleic acid.

The fat composition according to the invention preferably comprises at most 20.0% by weight of POP triglycerides, more preferably at most 18.0% by weight, even more preferably at most 16.0% by weight and from 0.0 to 15.0% by weight; based on the total triglycerides present in the fat composition, wherein P is palmitic acid and O is oleic acid.

The fat composition according to the invention preferably comprises at most 45.0% by weight of POSt triglycerides, more preferably from 0.1% to 42.0% by weight, even more preferably from 1.0% to 40.0% by weight and most preferably from 3.0% to 38.0% by weight; based on the total triglycerides present in the fat composition, wherein P is palmitic acid, O is oleic acid and St is stearic acid.

The fat composition according to the invention preferably comprises from 15.0% to 60.0% by weight of StOSt triglycerides, more preferably from 20.0% to 55.0% by weight, even more preferably from 20.0% to 50.0% by weight and most preferably from 22.0% to 45.0% by weight; based on the total triglycerides present in the fat composition, wherein O is oleic acid and St is stearic acid.

The fat composition according to the invention preferably comprises at most 10.0% by weight of AOSt triglycerides, more preferably at most 6.0% by weight, even more preferably from 0.1% to 4.0% by weight and most preferably from 0.5% to 3.0% by weight; based on the total triglycerides present in the fat composition, wherein A is arachidic acid, O is oleic acid and St is stearic acid.

In a preferred embodiment, the fat composition comprises from 30% to 60% by weight of stearic acid (C18:0); and from 45% to 80% by weight of saturated fatty acid (SAFA); said percentages of acid referring to acids bound as acyl groups in glycerides in the fat composition and being based on the total weight of C8 to C24 fatty acids; and wherein the fat composition comprises from 1.5% to 7.5% by weight of SSS triglycerides, and from 0.1% to 9.9% by weight of UUU triglycerides, and has a weight ratio of S2U triglycerides to SSS triglycerides from 6.5 to 19.0 and a weight ratio of S2O triglycerides to S2L triglycerides from 1.0 to 25.0; based on the total triglycerides present in the fat composition, wherein S is saturated fatty acid, U is unsaturated fatty acid, O is oleic acid and L is linoleic acid.

In a more preferred embodiment, the fat composition comprises from 31% to 55% by weight of stearic acid (C18:0); and from 45% to 75% by weight of saturated fatty acid (SAFA); said percentages of acid referring to acids bound as acyl groups in glycerides in the fat composition and being based on the total weight of C8 to C24 fatty acids; and wherein the fat composition comprises from 2.0% to 7.0% by weight of SSS triglycerides, and from 0.2% to 9.8% by weight of UUU triglycerides, and has a weight ratio of S2U triglycerides to SSS triglycerides from 6.5 to 18.0 and a weight ratio of S2O triglycerides to S2L triglycerides from 1.5 to 20.0; based on the total triglycerides present in the fat composition, wherein S is saturated fatty acid, U is unsaturated fatty acid, O is oleic acid and L is linoleic acid.

In an even more preferred embodiment, the fat composition comprises from 32% to 52% by weight of stearic acid (C18:0); and from 45% to 70% by weight of saturated fatty acid (SAFA); said percentages of acid referring to acids bound as acyl groups in glycerides in the fat composition and being based on the total weight of C8 to C24 fatty acids; and wherein the fat composition comprises from 2.3% to 6.8% by weight of SSS triglycerides, and from 0.3% to 9.7% by weight of UUU triglycerides, and has a weight ratio of S2U triglycerides to SSS triglycerides from 7.0 to 17.0 and a weight ratio of S2O triglycerides to S2L triglycerides from 2.0 to 18.0; based on the total triglycerides present in the fat composition, wherein S is saturated fatty acid, U is unsaturated fatty acid, O is oleic acid and L is linoleic acid.

In a most preferred embodiment, the fat composition comprises from 33% to 50% by weight of stearic acid (C18:0); and from 46% to 65% by weight of saturated fatty acid (SAFA); said percentages of acid referring to acids bound as acyl groups in glycerides in the fat composition and being based on the total weight of C8 to C24 fatty acids; and wherein the fat composition comprises from 2.5% to 6.5% by weight of SSS triglycerides, and from 0.5% to 9.5% by weight of UUU triglycerides, and has a weight ratio of S2U triglycerides to SSS triglycerides from 7.0 to 16.0 and a weight ratio of S2O triglycerides to S2L triglycerides from 2.5 to 15.0; based on the total triglycerides present in the fat composition, wherein S is saturated fatty acid, U is unsaturated fatty acid, O is oleic acid and L is linoleic acid.

The fat composition according to the invention preferably has from 20.0 to 95.0 solid fat content at 10°C, more preferably from 23.0 to 93.0, even more preferably from 25.0 to 91.0 and most preferably from 28.0 to 89.0; measured on unstabilized fat according to ISO 8292-1.

The fat composition according to the invention preferably has from 5.0 to 65.0 solid fat content at 20°C, more preferably from 6.0 to 60.0, even more preferably from 8.0 to 55.0 and most preferably from 10.0 to 52.0; measured on unstabilized fat according to ISO 8292-1.

The fat composition according to the invention preferably has from 2.5 to 20.0 solid fat content at 25°C, more preferably from 3.0 to 19.0, even more preferably from 4.0 to 18.0 and most preferably from 4.5 to 17.5; measured on unstabilized fat according to ISO 8292-1.

The fat composition according to the invention preferably has from 1.5 to 15.0 solid fat content at 30°C, preferably from 2.0 to 13.0, more preferably from 2.5 to 11.0 and even more preferably from 3.0 to 10.0; measured on unstabilized fat according to ISO 8292-1.

The fat composition according to the invention preferably has at most 10.0 solid fat content at 35°C, preferably from 1.0 to 9.0, more preferably from 1.5 to 8.0 and even more preferably from 2.0 to 7.0; measured on unstabilized fat according to ISO 8292-1.

The fat composition according to the invention preferably has at most 7.0 solid fat content at 40°C, preferably at most 6.0, more preferably from 0.1 to 5.5 and even more preferably from 0.3 to 5.0; measured on unstabilized fat according to ISO 8292-1.

In a preferred embodiment, the fat composition according to the invention has from 20.0 to 95.0 solid fat content at 10°C; from 5.0 to 65.0 solid fat content at 20°C; from 2.5 to 20.0 solid fat content at 25°C; from 1.5 to 15.0 solid fat content at 30°C; at most 10.0 solid fat content at 35°C; and at most 7.0 solid fat content at 40°C; measured on unstabilized fat according to ISO 8292-1.

In a more preferred embodiment, the fat composition according to the invention has from 23.0 to 93.0 solid fat content at 10°C; from 6.0 to 60.0 solid fat content at 20°C; from 3.0 to 19.0 solid fat content at 25°C; from 2.0 to 13.0 solid fat content at 30°C; from 1.0 to 9.0 solid fat content at 35°C; and at most 6.0 solid fat content at 40°C; measured on unstabilized fat according to ISO 8292-1.

In an even more preferred embodiment, the fat composition according to the invention has from 25.0 to 91.0 solid fat content at 10°C; from 8.0 to 55.0 solid fat content at 20°C; from 4.0 to 18.0 solid fat content at 25°C; from 2.5 to 11.0 solid fat content at 30°C; from 1.5 to 8.0 solid fat content at 35°C; and from 0.1 to 5.5 solid fat content at 40°C; measured on unstabilized fat according to ISO 8292-1.

In a most preferred embodiment, the fat composition according to the invention has from 28.0 to 89.0 solid fat content at 10°C; from 10.0 to 52.0 solid fat content at 20°C; from 4.5 to 17.5 solid fat content at 25°C; from 3.0 to 10.0 solid fat content at 30°C; from 2.0 to 7.0 solid fat content at 35°C; and from 0.3 to 5.0 solid fat content at 40°C; measured on unstabilized fat according to ISO 8292-1.

The fat composition according to the invention preferably has a diglyceride content of at most 10.0%, more preferably from 1.0% to 9.5%, even more preferably from 1.5% to 9.0% and most preferably from 2.0% to 8.5%. The term "diglyceride" refers to a glyceride consisting of two fatty acid chains covalently bonded to a glycerol molecule, not necessarily limited to specific positions on the glycerol backbone (1,3- or 2- positions). Diglyceride content may be determined for example by straight phase HPLC or by high performance size exclusion chromatography according to ISO 18395:2005(E).

The invention also relates to a process of preparing the fat composition according to the invention comprising blending a non-interesterified fat or oil and an interesterified fat or oil where the fat or oil is selected from a group consisting of cocoa butter, shea butter, illipe butter, sal butter, kokum fat, mango fat, high stearic sunflower oil, high stearic soybean oil, high stearic rapeseed oil, high stearic canola oil, allanblackia fat, pentadesma fat, sonchy fat, fraction thereof and mixture thereof. The weight ratio of the non-interesterfied fat or oil to the interesterified fat or oil is at least 1.0, preferably from 1.1 to 20.0, more preferably from 1.1 to 15.0 and even more preferably from 1.2 to 10.0. The term "interesterified" refers to an oil or fat subjected to a random non-specific redistribution of the fatty acid moieties present in a triglyceride oil over its glycerol moieties.

In a preferred embodiment, the process of preparing the fat composition according to the invention comprising the blending of shea butter and interesterified shea butter wherein the weight ratio of shea butter to interesterified shea butter is from 1.1 to 20.0, more preferably from 1.1 to 15.0 and even more preferably from 1.2 to 10.0.

In another preferred embodiment, the process of preparing the fat composition according to the invention comprising the blending of cocoa butter and interesterified cocoa butter wherein the weight ratio of cocoa butter to interesterified cocoa butter is from 1.1 to 20.0, more preferably from 1.1 to 15.0 and even more preferably from 1.2 to 10.0.

In an alternative embodiment of the process for making a fat composition according to the invention, a fat or oil selected from a group consisting of cocoa butter, shea butter, illipe butter, sal butter, kokum fat, mango fat, high stearic sunflower oil, high stearic soybean oil, high stearic rapeseed oil, high stearic canola oil, allanblackia fat, pentadesma fat, sonchy fat, fraction thereof and mixture thereof is partially interesterified.

The partial interesterification is carried out by using from 0.1% to 10% by weight of a lipase, preferably from 0.5% to 5% by weight and more preferably from 0.5% to 3% by weight, based on the total amount of the fat or oil to be reacted. The lipase is preferably an immobilized lipase. Preferably, the lipase is selected from *Rhizomucor miehei, Candida antarctica, Thermomyces lanuginosus, Rhizopus oryzae,* or the combination thereof. For example, Novozym^{®} 40086 is a commercial immobilized lipase fomrfrom *Rhizomucor miehei* immobilized on microporous anionic resin. Novozym^{®} 435 is a commercial immobilized lipase from *Candida antarctica* immobilized on microporous acrylic resin. Lipozyme^{®} TL IM is a commercial immobilized lipase from *Thermomyces lanuginosus* immobilized on a non-compressible silica gel carrier.

The reaction may be carried out as a discontinuous process such as in a batch reactor, or as a continuous process such as in a packed-bed reactor. The partial interesterification is carried out at a temperature of from 50°C to 80°C, preferably from 55°C to 70°C and more preferably from 55°C to 65°C. The partial interesterification is carried out for a period of time of from 0.5 hours to 12 hours, preferably from 1 hour to 8 hours and more preferably from 1.5 hours to 7.5 hours. The period of time refers to reaction time in a batch reactor. In a packed-bed reactor, the period of time refers to residence time. The combination of these parameters can be selected based on the desired fat composition according to the invention by the outcome of the reactor. For example, if the period of time is longer, the conversion of the interesterification typically is higher. If the amount of lipase used for the reaction is higher, a higher reaction rate typically will result.

The invention also relates to a fat blend suitable for use in a water-in-oil emulsion as fat phase, the fat blend comprising from 5% to 95% by weight of the fat composition according to the invention, preferably from 10% to 90% by weight, more preferably from 15% to 85% by weight, even more preferably from 20% to 80% by weight and most preferably from 25% to 75% by weight; and from 5% to 95% by weight of an oil selected from a group consisting of coconut oil, sunflower oil, high oleic sunflower oil, high oleic rapeseed oil, high oleic canola oil, high oleic soybean oil, rapeseed oil, rice oil, soybean oil, cottonseed oil, chia oil, flaxseed oil, corn oil, safflower oil, olive oil, canola oil, grapeseed oil, pumpkin oil, sesame oil, walnut oil, hazelnut oil, fraction thereof and mixture thereof, preferably from 10% to 90% by weight, more preferably from 15% to 85% by weight, even more preferably from 20% to 80% by weight and most preferably from 25% to 75% by weight.

In a preferred embodiment, the fat blend according to the invention comprises from 20% to 80% by weight of the fat composition according to the invention and from 80% to 20% by weight of an oil selected from rapeseed oil, sunflower oil, canola oil, soybean oil, high oleic sunflower oil or combination thereof; and from 2% to 12% by weight of coconut oil.

In a more preferred embodiment, the fat blend according to the invention comprises from 60% to 80% by weight of the fat composition according to the invention; from 10% to 30% by weight of an oil selected from rapeseed oil, sunflower oil, canola oil, soybean oil, high oleic sunflower oil or combination thereof; and from 2% to 12% by weight of coconut oil.

In a more preferred embodiment, the fat blend according to the invention consists essentially of, or consists of, 60% to 80% by weight of the fat composition according to the invention; from 10% to 30% by weight of oil selected from rapeseed oil, sunflower oil, canola oil, soybean oil, high oleic sunflower oil or combination thereof; and from 2% to 12% by weight of coconut oil.

In a preferred embodiment, the fat blend according to the invention comprises from 30% to 70% by weight of the fat composition according to the invention and from 70% to 30% by weight of oil selected from rapeseed oil, sunflower oil, canola oil, soybean oil, high oleic sunflower oil or combination thereof.

In a more preferred embodiment, the fat blend according to the invention comprises from 32% to 68% by weight of the fat composition according to the invention and from 68% to 32% by weight of oil selected from rapeseed oil, sunflower oil, canola oil, soybean oil, high oleic sunflower oil or combination thereof.

In a more preferred embodiment, the fat blend according to the invention consists essentially of, or consists of, from 32% to 68% by weight of the fat composition according to the invention and from 68% to 32% by weight of oil selected from rapeseed oil, sunflower oil, canola oil, soybean oil, high oleic sunflower oil or combination thereof.

The fat blend according to the invention preferably has from 8.0 to 55.0 solid fat content at 10°C, more preferably from 9.0 to 50.0, even more preferably from 10.0 to 48.0, most preferably from 11.0 to 45.0 and particularly most preferably from 17.0 to 44.0; measured on unstabilized fat according to ISO 8292-1.

The fat blend according to the invention preferably has from 2.0 to 30.0 solid fat content at 20°C, more preferably from 3.0 to 25.0, even more preferably from 3.5 to 22.0, most preferably from 4.0 to 20.0 and particularly most preferably from 11.0 to 18.0; measured on unstabilized fat according to ISO 8292-1.

The fat blend according to the invention preferably has at most 15.0 solid fat content at 25°C, more preferably from 1.0 to 12.0, even more preferably from 2.0 to 10.0 and most preferably from 2.5 to 9.0; measured on unstabilized fat according to ISO 8292-1.

The fat blend according to the invention preferably has at most 10.0 solid fat content at 30°C, preferably at most 8.0, more preferably from 0.5 to 7.0, even more preferably from 1.0 to 6.0 and most preferably from 1.5 to 4.5; measured on unstabilized fat according to ISO 8292-1.

The fat blend according to the invention preferably has at most 8.0 solid fat content at 35°C, preferably at most 7.0, more preferably from 0.5 to 6.0, even more preferably from 0.5 to 5.0 and most preferably from 1.0 to 2.5; measured on unstabilized fat according to ISO 8292-1.

The fat blend according to the invention preferably has at most 5.0 solid fat content at 40°C, preferably at most 4.0, more preferably at most 3.0 and even more preferably from 0.1 to 2.5; measured on unstabilized fat according to ISO 8292-1.

In a preferred embodiment, the fat blend according to the invention has from 8.0 to 55.0 solid fat content at 10°C; from 2.0 to 30.0 solid fat content at 20°C; at most 15.0 solid fat content at 25°C; at most 10.0 solid fat content at 30°C; at most 8.0 solid fat content at 35°C; and at most 5.0 solid fat content at 40°C; measured on unstabilized fat according to ISO 8292-1.

In a more preferred embodiment, the fat blend according to the invention has from 9.0 to 50.0 solid fat content at 10°C; from 3.0 to 25.0 solid fat content at 20°C; from 1.0 to 12.0 solid fat content at 25°C; at most 8.0 solid fat content at 30°C; at most 7.0 solid fat content at 35°C; and at most 4.0 solid fat content at 40°C; measured on unstabilized fat according to ISO 8292-1.

In an even more preferred embodiment, the fat blend according to the invention has from 10.0 to 48.0 solid fat content at 10°C; from 3.5 to 22.0 solid fat content at 20°C; from 2.0 to 10.0 solid fat content at 25°C; from 0.5 to 7.0 solid fat content at 30°C; from 0.5 to 6.0 solid fat content at 35°C; and at most 3.0 solid fat content at 40°C; measured on unstabilized fat according to ISO 8292-1.

In a most preferred embodiment, the fat blend according to the invention has from 11.0 to 45.0 solid fat content at 10°C; from 4.0 to 20.0 solid fat content at 20°C; from 2.5 to 9.0 solid fat content at 25°C; from 1.0 to 6.0 solid fat content at 30°C; from 0.5 to 5.0 solid fat content at 35°C; and from 0.1 to 2.5 solid fat content at 40°C; measured on unstabilized fat according to ISO 8292-1.

In a particularly most preferred embodiment, the fat blend according to the invention has from 17.0 to 44.0 solid fat content at 10°C; from 11.0 to 18.0 solid fat content at 20°C; from 2.5 to 9.0 solid fat content at 25°C; from 1.5 to 4.5 solid fat content at 30°C; from 1.0 to 2.5 solid fat content at 35°C; and from 0.1 to 2.5 solid fat content at 40°C; measured on unstabilized fat according to ISO 8292-1.

The fat blend according to the invention preferably comprises at most 5.0% by weight of CN48 triglycerides, more preferably at most 4.0% by weight, even more preferably from 0.1% to 3.0% by weight and most preferably from 0.2% to 2.0% by weight; based on total triglycerides present in the fat blend.

The fat blend according to the invention preferably comprises at most 15.0% by weight of CN50 triglycerides, more preferably from 0.5% to 13.0% by weight, even more preferably from 1.0% to 12.0% by weight and most preferably from 1.2% to 11.0% by weight; based on total triglycerides present in the fat blend.

The fat blend according to the invention preferably comprises from 5.0% to 45.0% by weight of CN52 triglycerides, more preferably from 6.0% to 40.0% by weight, even more preferably from 7.0% to 38.0% by weight and most preferably from 8.0% to 35.0% by weight; based on total triglycerides present in the fat blend.

The fat blend according to the invention preferably comprises from 45.0% to 85.0% by weight of CN54 triglycerides, more preferably from 48.0% to 80.0% by weight, even more preferably from 50.0% to 79.0% by weight and most preferably from 52.0% to 78.0% by weight; based on total triglycerides present in the fat blend.

The fat blend according to the invention preferably comprises at least 2.0% by weight of CN56 triglycerides, more preferably at least 2.5% by weight, even more preferably from 2.5% to 5.0% by weight and most preferably from 2.5% to 4.5% by weight; based on total triglycerides present in the fat blend.

Triglyceride composition may be determined for example based on molecular weight differences (Carbon Number (CN)) by GC (AOCS Ce 5-86). The notation triglyceride CNxx denotes triglycerides having xx carbon atoms in the fatty acyl groups e.g., CN54 includes tristearin. Amounts of triglycerides specified with each carbon number (CN), as is customary terminology in the art, are percentages by weight based on total triglycerides of CN26 to CN62 present in the fat composition.

In a preferred embodiment, the fat blend according to the invention comprises at most 5.0% by weight of CN48 triglycerides; at most 15.0% by weight of CN50 triglycerides; from 5.0% to 45.0% by weight of CN52 triglycerides; from 45.0% to 85.0% by weight of CN54 triglycerides; and at least 2.0% by weight of CN56 triglycerides; based on total triglycerides present in the fat blend.

In a more preferred embodiment, the fat blend according to the invention comprises at most 4.0% by weight of CN48 triglycerides; from 0.5% to 13.0% by weight of CN50 triglycerides; from 6.0% to 40.0% by weight of CN52 triglycerides; from 48.0% to 80.0% by weight of CN54 triglycerides; and at least 2.5% by eight of CN56 triglycerides; based on total triglycerides present in the fat blend.

In an even more preferred embodiment, the fat blend according to the invention comprises from 0.1% to 3.0% by weight of CN48 triglycerides; from 1.0% to 12.0% by weight of CN50 triglycerides; from 7.0% to 38.0% by weight of CN52 triglycerides; from 50.0% to 79.0% by weight of CN54 triglycerides; and from 2.5% to 5.0% by weight of CN56 triglycerides; based on total triglycerides present in the fat blend.

In a most preferred embodiment, the fat blend according to the invention comprises from 0.2% to 2.0% by weight of CN48 triglycerides; from 1.2% to 11.0% by weight of CN50 triglycerides; from 8.0% to 35.0% by weight of CN52 triglycerides; from 52.0% to 78.0% by weight of CN54 triglycerides; and from 2.5% to 4.5% by weight of CN56 triglycerides; based on total triglycerides present in the fat blend.

The fat blend of the invention preferably comprises from 12.0% to 50.0% by weight of stearic acid (C18:0), more preferably from 14.0% to 45.0% by weight and even more preferably from 15.0% to 35.0% by weight; said percentage of acid referring to acids bound as acyl groups in glycerides in the fat composition and being based on the total weight of C8 to C24 fatty acids.

The fat blend of the invention preferably comprises from 30.0% to 70.0% by weight of oleic acid (C18: 1), more preferably from 35.0% to 65.0% by weight and even more preferably from 45.5% to 60.0% by weight; said percentage of acid referring to acids bound as acyl groups in glycerides in the fat composition and being based on the total weight of C8 to C24 fatty acids.

The fat blend of the invention preferably comprises from 5.0% to 30.0% by weight of linoleic acid (C18:2), more preferably from 7.0% to 25.0% by weight and even more preferably from 8.6% to 20.0% by weight; said percentage of acid referring to acids bound as acyl groups in glycerides in the fat composition and being based on the total weight of C8 to C24 fatty acids.

The fat blend of the invention preferably comprises from 10% to 55% by weight of saturated fatty acid (SAFA), more preferably from 15% to 50% by weight, even more preferably from 16% to 45% by weight and most preferably from 18% to 43%; said percentage of acid referring to acids bound as acyl groups in glycerides in the fat composition and being based on the total weight of C8 to C24 fatty acids.

The fat blend according to the invention preferably has a content of trans fatty acid residues of less than 2% by weight, more preferably less than 1.5% by weight and even more preferably less than 1.0% by weight; said percentage of acid referring to acids bound as acyl groups in glycerides in the fat composition and being based on the total weight of C8 to C24 fatty acids.

The fat blend according to the invention preferably has an iodine value of from 40 to 95, more preferably from 45 to 93, even more preferably from 50 to 92 and most preferably from 55 to 91. The term "iodine value" refers to the number of grams of iodine that could be added to 100g of oil. Iodine value may be calculated according to AOCS Cd 1c-85 based on total acids bound as acyl groups in glycerides in the fat composition being based on the total weight of C8 to C24 fatty acids. Iodine value may alternatively be measured by AOCS Method Cd 1-25.

The invention also relates to a water-in-oil emulsion comprising from 5% to 95% by weight of the fat blend according to the invention and from 5% to 95% by weight of an aqueous phase. Preferably, the water-in-oil emulsion of the invention comprises from 10% to 90% by weight of the fat blend according to the invention and from 10% to 90% by weight of an aqueous phase. More preferably, the water-in-oil emulsion of the invention comprises from 15% to 85% by weight of the fat blend according to the invention and from 15% to 85% by weight of an aqueous phase.

The term "water-in-oil emulsion" refers to an emulsion where water as the dispersed phase is distributed into oil as the continuous phase, as well known in the art. The aqueous phase generally comprises or consists (essentially) of water and/or other ingredients such as milk, milk derivatives such as whey, buttermilk or cream, or plant milk such as rice milk, soy milk, oat milk or almond milk and the derivatives thereof.

The water-in-oil emulsion according to the invention is preferably an edible spreadable emulsion. More preferably, the water-in-oil emulsion according to the invention is margarine or spread. These products are in generally considered as plant or vegan butter alternatives or substitutes to be used in the same way as butter in various food applications such as confectionery, bakery or culinary applications.

The water-in-oil emulsion according to the invention preferably comprises from 5% to 75% by weight of the fat composition according to the invention, more preferably from 10% to 70% by weight, even more preferably from 15% to 65% by weight and most preferably from 20% to 60% by weight.

Preferably, the water-in-oil emulsion according to the invention further comprises one or more ingredients selected from emulsifier, flavor, milk, milk powder, colorant, salt, pH regulator, sugar, sirup, cereal, legume, seed, fruit, nut, plant extract, vegetable juice, plant milk, plant protein, antioxidant, preservative, starch, modified starch, fiber, thickener, stabilizer, probiotic and vitamin.

Preferably, the water-in-oil emulsion according to the invention comprises from 0.05% to 5.0% by weight of at least one emulsifier, more preferably from 0.1 to 3.0% by weight and even more preferably from 0.2% to 2.0% by weight. The at least one emulsifier is preferably selected from the group consisting of mono- and/or diglycerides of fatty acids, distilled monoglycerides, lecithins, organic esters of mono- and/or diglycerides of fatty acids, polyglycerol esters, polyglycerolpolyricinoleate, sucrose esters and sucroglycerides, stearoyl-lactylates, 1-2 propanediol esters, sorbitan esters and mixtures thereof.

The colorants are preferably selected from the group consisting of carotenes, annatto and mixture thereof, more preferably beta-carotenes. The antioxidants are preferably tocopherols and/or natural extracts, such as from tea or oregano. The preservatives are preferably sorbic acid, sorbates, benzoates or mixtures thereof. The plant proteins are preferably selected from the group consisting of sunflower protein, fava protein, faba protein, lentil protein, chickpea protein, soya protein, pea protein, canola protein, wheat protein, rapeseed protein and mixture thereof.

The term "plant milk" is also named as plant-based liquids, alternative milk, nut milk or vegan milk which is a plant juice that resembles the color of milk and refers to manufactured, non-dairy beverages made from a water-based plant extract for flavoring and aroma. Preferably, plant milk is selected from a group consisting of almond milk, soy milk, coconut milk, rice milk, oat milk, hemp milk, pea milk, peanut milk, cashew milk, triticale milk, wheat milk, barley milk, spelt milk, millet milk, derives thereof and mixture thereof.

In a preferred embodiment, the water-in-oil emulsion of the invention comprises from 50% to 90% by weight of the fat blend according to the invention; from 10% to 50% by weight of water; from 0.1% to 0.5% by weight of an emulsifier such as lecithin or mono- and diglycerides; from 0.2% to 0.7% by weight of salt; and optionally from 0.2% to 0.7% by weight of milk powder.

The invention also relates to a process for making a water-in-oil emulsion according to the invention comprising the steps of: a) preparing the fat blend according to the invention, preferably including ingredients soluble in fat such as emulsifier, fat-soluble flavor and fat-soluble colorant; b) preparing an aqueous phase, preferably including ingredients soluble in water such as milk, milk powder, pH regulator, salt, plant milk and sugar; c) emulsifying the fat blend and the aqueous phase to obtain an emulsion; d) crystallizing the obtained emulsion; and e) optionally, pumping a gas in the emulsion during or after step d), wherein the gas is preferably selected from a group consisting of nitrogen, carbon dioxide, argon, air or a combination thereof.

The invention also relates to the use of a water-in-oil emulsion according to the invention in a confectionery product, a bakery product or a culinary product.

The listing or discussion of an apparently prior-published document in this specification should not necessarily be taken as an acknowledgement that the document is part of the state of the art or is common general knowledge.

Preferences and options for a given aspect, embodiment, feature or parameter of the invention should, unless the context indicates otherwise, be regarded as having been disclosed in combination with any and all preferences and options for all other aspects, embodiments, features and parameters of the invention.

Numbered paragraphs of the invention are set out below:
Numbered Paragraph 1 - A fat composition, comprising:
   at least 30% by weight of stearic acid (C18:0); and
   at least 45% by weight of saturated fatty acid (SAFA);
   said percentages of acid referring to acids bound as acyl groups in glycerides in the fat composition and being based on the total weight of C8 to C24 fatty acids;
   and wherein the fat composition comprises from 1.0% to 8.0% by weight of SSS triglycerides and at most 10.0% by weight of UUU triglycerides, based on the total triglycerides present in the fat composition;
   and wherein the fat composition has a weight ratio of S2U triglycerides to SSS triglycerides of from 6.0 to 20.0 and a weight ratio of S2O triglycerides to S2L triglycerides of at most 30.0, wherein S is saturated fatty acid, U is unsaturated fatty acid, O is oleic acid and L is linoleic acid.
Numbered Paragraph 2 - Fat composition according to Numbered Paragraph 1 wherein the fat composition has a percentage of saturated fatty acid on the second position of triglyceride out of total saturated fatty acid (Sn-2 of SAFA%) of from 6.0% to 25.0%, preferably from 6.0% to 22.0%, more preferably from 6.5% to 20.0% and even more preferably from 7.0% to 19.0%.
Numbered Paragraph 3 - Fat composition according to Numbered Paragraph 1 or Numbered Paragraph 2, wherein the fat composition comprises:
   at most 5% by weight of lauric acid (C12:0), preferably from 0% to 4% by weight, more preferably from 0% to 3% by weight and even more preferably from 0% to 2% by weight; and/or
   at most 30% by weight of palmitic acid (C16:0), preferably from 0% to 29% by weight, more preferably from 1% to 28% by weight and even more preferably from 2% to 27% by weight; and/or
   from 30% to 60% by weight of stearic acid (C18:0), preferably from 31% to 55% by weight, more preferably from 32% to 52% by weight and even more preferably from 33% to 50% by weight; and/or
   from 20% to 55% by weight of oleic acid (C18:1), preferably from 23% to 53% by weight, more preferably from 25% to 50% by weight and even more preferably from 28% to 48%; and/or
   from 45% to 80% by weight of saturated fatty acid (SAFA), preferably from 45% to 75% by weight, more preferably from 45% to 70% by weight and even more preferably from 46% to 65%;
   said percentages of acid referring to acids bound as acyl groups in glycerides in the fat composition and being based on the total weight of C8 to C24 fatty acids.
Numbered Paragraph 4 - Fat composition according to any of the preceding Numbered Paragraphs, wherein the fat composition comprises:
   from 1.5% to 7.5% by weight of SSS triglycerides, preferably from 2.0% to 7.0% by weight, more preferably from 2.3% to 6.8% by weight and even more preferably from 2.5% to 6.5% by weight; and/or
   from 0.1% to 9.9% by weight of UUU triglycerides, preferably from 0.2% to 9.8% by weight, more preferably from 0.3% to 9.7% by weight and even more preferably from 0.5% to 9.5% by weight; and/or
   from 20.0% to 95.0% by weight of S2U triglycerides, preferably from 25.0% to 90.0% by weight, more preferably from 30.0% to 88.0% by weight and even more preferably from 35.0% to 85.0% by weight; and/or
   from 2.0% to 50.0% by weight of SU2 triglycerides, preferably from 4.0% to 45.0% by weight, more preferably from 5.0% to 42.0% by weight and even more preferably from 6.0% to 41.0% by weight;
   based on the total triglycerides present in the fat composition, wherein S is saturated fatty acid and U is unsaturated fatty acid.
Numbered Paragraph 5 - Fat composition according to one of the preceding Numbered Paragraphs, wherein the fat composition has a weight ratio of S2U triglycerides to SSS triglycerides from 6.5 to 19.0, preferably from 6.5 to 18.0, more preferably from 7.0 to 17.0 and even more preferably from 7.0 to 16.0; based on the total triglycerides present in the fat composition, wherein S is saturated fatty acid and U is unsaturated fatty acid.
Numbered Paragraph 6 - Fat composition according to any of the preceding Numbered Paragraphs, wherein the fat composition comprises:
   from 30.0% to 85.0% by weight of S2O triglycerides, preferably from 32.0% to 82.0% by weight, more preferably from 35.0% to 80.0% by weight and even more preferably from 38.0% to 80.0 by weight; and/or
   from 0.0% to 20.0% by weight of S2L triglycerides, preferably from 1.0% to 15.0% by weight, more preferably from 2.0% to 12.0% by weight and even more preferably from 3.0% to 10.0% by weight;
   based on the total triglycerides present in the fat composition, wherein S is saturated fatty acid, O is oleic acid and L is linoleic acid.
Numbered Paragraph 7 - Fat composition according to any of the preceding Numbered Paragraphs, wherein the fat composition has a weight ratio of S2O triglycerides to S2L triglycerides from 1.0 to 25.0, preferably from 1.5 to 20.0, more preferably from 2.0 to 18.0 and even more preferably from 2.5 to 15.0; based on the total triglycerides present in the fat composition, wherein S is saturated fatty acid, O is oleic acid and L is linoleic acid.
Numbered Paragraph 8 - Fat composition according to any of the preceding Numbered Paragraphs, wherein the fat composition has:
   from 20.0 to 95.0 solid fat content at 10°C, preferably from 23.0 to 93.0, more preferably from 25.0 to 91.0 and even more preferably from 28.0 to 89.0; and/or
   from 5.0 to 65.0 solid fat content at 20°C, preferably from 6.0 to 60.0, more preferably from 8.0 to 55.0 and even more preferably from 10.0 to 52.0; and/or
   from 2.5 to 20.0 solid fat content at 25°C, preferably from 3.0 to 19.0, more preferably from 4.0 to 18.0 and even more preferably from 4.5 to 17.5; and/or
   from 1.5 to 15.0 solid fat content at 30°C, preferably from 2.0 to 13.0, more preferably from 2.5 to 11.0 and even more preferably from 3.0 to 10.0; and/or
   at most 10.0 solid fat content at 35°C, preferably from 1.0 to 9.0, more preferably from 1.5 to 8.0 and even more preferably from 2.0 to 7.0; and/or at most 7.0 solid fat content at 40°C, preferably at most 6.0, more preferably from 0.1 to 5.5 and even more preferably from 0.3 to 5.0;
   measured on unstabilized fat according to ISO 8292-1.
Numbered Paragraph 9 - Process for making a fat composition of any of the preceding Numbered Paragraphs, which comprises blending a non-interesterified fat or oil and an interesterified fat or oil wherein the fat or oil is selected from a group consisting of cocoa butter, shea butter, illipe butter, sal butter, kokum fat, mango fat, high stearic sunflower oil, high stearic soybean oil, high stearic rapeseed oil, high stearic canola oil, allanblackia fat, pentadesma fat, sonchy fat, fraction thereof and mixture thereof, wherein the weight ratio of the non-interesterfied fat or oil to the interesterified fat or oil is at least 1.0, preferably from 1.1 to 20.0, more preferably from 1.1 to 15.0 and even more preferably from 1.2 to 10.0.
Numbered Paragraph 10 - Process for making a fat composition of any of Numbered Paragraphs 1 to 8, wherein a fat or oil selected from a group consisting of cocoa butter, shea butter, illipe butter, sal butter, kokum fat, mango fat, high stearic sunflower oil, high stearic soybean oil, high stearic rapeseed oil, high stearic canola oil, allanblackia fat, pentadesma fat, sonchy fat, fraction thereof and mixture thereof is partially interesterified, carried out by using from 0.1% to 10% by weight of a lipase, preferably from 0.5% to 5% by weight; at a temperature of from 50°C to 80°C, preferably from 55°C to 70°C; and for a period of time of from 0.5 hours to 12 hours, preferably from 1 hour to 8 hours.
Numbered Paragraph 11 - A fat blend comprising:
   from 5% to 95% by weight of the fat composition of any one of Numbered Paragraphs 1 to 8, preferably from 10% to 90% by weight, more preferably from 15% to 85% by weight, even more preferably from 20% to 80% by weight and most preferably from 25% to 75% by weight; and
   from 5% to 95% by weight of an oil selected from a group consisting of coconut oil, sunflower oil, high oleic sunflower oil, high oleic rapeseed oil, high oleic canola oil, high oleic soybean oil, rapeseed oil, rice oil, soybean oil, cottonseed oil, chia oil, flaxseed oil, corn oil, safflower oil, olive oil, canola oil, grapeseed oil, pumpkin oil, sesame oil, walnut oil, hazelnut oil, fraction thereof and mixture thereof, preferably from 10% to 90% by weight, more preferably from 15% to 85% by weight, even more preferably from 20% to 80% by weight and most preferably from 25% to 75% by weight.
Numbered Paragraph 12 - Fat blend according to Numbered Paragraph 11, wherein the fat blend has:
   from 8.0 to 55.0 solid fat content at 10°C, preferably from 9.0 to 50.0, more preferably from 10.0 to 48.0, even more preferably from 11.0 to 45.0 and most preferably from 17.0 to 44.0; and/or
   from 2.0 to 30.0 solid fat content at 20°C, preferably from 3.0 to 25.0, more preferably from 3.5 to 22.0, even more preferably from 4.0 to 20.0 and most preferably from 11.0 to 18.0; and/or
   at most 15.0 solid fat content at 25°C, preferably from 1.0 to 12.0, more preferably from 2.0 to 10.0 and even more preferably from 2.5 to 9.0; and/or
   at most 10.0 solid fat content at 30°C, preferably at most 8.0, more preferably from 0.5 to 7.0, even more preferably from 1.0 to 6.0 and most preferably from 1.5 to 4.5; and/or
   at most 8.0 solid fat content at 35°C, preferably at most 7.0, more preferably from 0.5 to 6.0, even more preferably from 0.5 to 5.0 and most preferably from 1.0 to 2.5; and/or
   at most 5.0 solid fat content at 40°C, preferably at most 4.0, more preferably at most 3.0 and even more preferably from 0.1 to 2.5;
   measured on unstabilized fat according to ISO 8292-1.
Numbered Paragraph 13 - Fat blend according to Numbered Paragraph 11 or 12, wherein the fat blend comprises:
   from 12.0% to 50.0% by weight of stearic acid (C18:0), more preferably from 14.0% to 45.0% by weight and even more preferably from 15.0% to 35.0% by weight; and/or
   from 30.0% to 70.0% by weight of oleic acid (C18:1), more preferably from 35.0% to 65.0% by weight and even more preferably from 45.5% to 60.0% by weight; and/or
   from 5.0% to 30.0% by weight of linoleic acid (C18:2), more preferably from 7.0% to 25.0% by weight and even more preferably from 8.6% to 20.0% by weight; said percentage of acid referring to acids bound as acyl groups in glycerides in the fat composition and being based on the total weight of C8 to C24 fatty acids.
Numbered Paragraph 14 - A water-in-oil emulsion comprising:
   from 5% to 95% by weight of the fat blend of any one of Numbered Paragraphs 11 to 13, preferably from 10% to 90% by weight and more preferably from 15% to 85% by weight; and
   from 5% to 95% by weight of an aqueous phase, preferably from 10% to 90% by weight and more preferably from 15% to 85% by weight.
Numbered Paragraph 15 - Water-in-oil emulsion according to Numbered Paragraph 14, wherein the water-in-oil emulsion is an edible spreadable emulsion, preferably margarine or spread.
Numbered Paragraph 16 - Water-in-oil emulsion according to Numbered Paragraphs 14 to 15, wherein the water-in-oil emulsion comprises from 5% to 75% by weight of the fat composition of any one of Claims 1 to 8, preferably from 10% to 70% by weight, more preferably from 15% to 65% by weight and even more preferably from 20% to 60% by weight.
Numbered Paragraph 17 - Water-in-oil emulsion according to any of Numbered Paragraphs 14 to 16, wherein the water-in-oil emulsion further comprises one or more ingredients selected from emulsifier, flavor, milk, milk powder, colorant, salt, pH regulator, sugar, sirup, cereal, legume, seed, fruit, nut, plant extract, vegetable juice, plant milk, plant protein, antioxidant, preservative, starch, modified starch, fiber, thickener, stabilizer, probiotic and vitamin.
Numbered Paragraph 18 - Process for making a water-in-oil emulsion according to any of Numbered Paragraphs 14 to 17 comprising the steps of:
   a) Preparing the fat blend according to any one of Numbered Paragraph 11 to 13, preferably including ingredients soluble in fat such as emulsifier, fat-soluble flavor and fat-soluble colorant;
   b) Preparing an aqueous phase, preferably including ingredients soluble in water such as milk, milk powder, pH regulator, salt, plant milk and sugar;
   c) Emulsifying the fat blend and the aqueous phase to obtain an emulsion;
   d) Crystallizing the obtained emulsion; and
   e) Optionally, pumping a gas in the emulsion during or after step d), wherein the gas is preferably selected from a group consisting of nitrogen, carbon dioxide, argon, air or a combination thereof.
Numbered Paragraph 19 - Use of a water-in-oil emulsion according to any of Numbered Paragraph 14 to 17 in a confectionery product, a bakery product or a culinary product.

The following non-limiting examples illustrate the invention and do not limit its scope in any way. In the examples and throughout this specification, all percentages, parts and ratios are by weight unless indicated otherwise.

### Examples

Throughout these examples:
US-Nx refers to solid fat content determined by NMR on unstabilised fat at x°C (ISO 8292-1);
Cx:y refers to a fatty acid having x carbon atoms and y double bonds; levels determined by GC-FAME (ISO 12966-2 and ISO 12966-4);
SAFA refers to saturated fatty acids;
MUFA refers to mono-unsaturated fatty acids;
PUFA refers to poly-unsaturated fatty acids;
IV FAME refers to calculated iodine value according to AOCS Cd 1c-85;
TRANS refers to trans fatty acids: unsaturated fatty acids having a double bond in a trans arrangement;
O, P, St, L and A refer to oleic, palmitic, stearic, linoleic and arachidic acids, respectively;
Triglyceride compositions: POSt, and other triglycerides were determined by GC (ISO 23275), wherein each GC peak includes triglycerides having the same fatty acids in different positions e.g., POSt is in the same signal peak as PStO and StOP; S refers to saturated fatty acids;
U refers to unsaturated fatty acids;
SSS refers to trisaturated triglycerides where the triglycerides contain three saturated fatty acids;
UUU refers to triunsaturated triglycerides where the triglycerides contain three unsaturated fatty acids;
S2U refers to disaturated-monounsaturated triglyceride where the triglycerides contains two saturated fatty acids and one unsaturated fatty acid regardless their positions in the triglyceride;
SU2 refers to monosaturated-diunsaturated triglyceride where the triglycerides contains one saturated fatty acid and two unsaturated fatty acids regardless their positions in the triglyceride;
S2O refers to monooleate-disaturated triglyceride where the triglycerides contains two saturated fatty acids and one oleic acid regardless their positions in the triglyceride;
S2L refers to monolinoleate-disaturated triglyceride where the triglycerides contains two saturated fatty acids and one linoleic acid regardless their positions in the triglyceride;
Diglyceride refers to the percentage of diglyceride in the composition measured by straight phase HPLC;
SN-2 of SAFA% refers to the percentage of saturated fatty acid (SAFA) present at the 2-position of the triglyceride in comparison to the percentage of saturated fatty acid (SAFA) in the fat sample. The distribution of fatty acids in triglyceride is determined based on joint JOCS/AOCS official method Ch 3a-19. The percentage of SAFA residues in the 2-position is determined by finding: (a) the total SAFA content of the fat sample by GC-FAME (ISO 12966-2 and ISO 12966-4); and (b) the SAFA content of the 2-position by GC-FAME (ISO 12966-2 and ISO 12966-4) in 2-monoglyceride after the transesterification reaction of triacylglycerols with ethanol by immobilized lipase and the isolation with preparative straight phase HPLC. The Sn-2 of SAFA% is thus ((b) x 100)/((a) x 3) %; and
CNxx, refers to a triglyceride having xx carbon atoms (excluding the carbon atoms from the glycerol, as is standard practice), levels determined by GC with pretreatment to remove the diglycerides eventually (AOCS Ce 5-86).

### Example 1 - Preparation of fat compositions

Refined Shea butter was chemically interesterified by using sodium methoxide as catalyst. After chemical interesterification, the interesterified shea butter was physically refined. Refined cocoa butter was chemically interesterified by using sodium methoxide as catalyst. After chemical interesterification, the interesterified cocoa butter was physically refined.

Fat composition 1 was a blend of 87.7% by weight of refined shea butter and 12.3% by weight of interesterified shea butter. Fat composition 2 was a blend of 57.7% by weight of refined shea butter and 42.3% by weight of interesterified shea butter. Fat composition 3 was a blend of 81.8% by weight of refined cocoa butter and 18.2% by weight of interesterified cocoa butter. Fat composition 4 was a blend of 71.4% by weight of refined shea butter and 28.6% by weight of interesterified shea butter.

Two comparative fat compositions were prepared. Comparative fat composition 1 was 100% by weight of refined shea butter. Comparative fat composition 2 was 100% by weight of interesterified shea butter.

The analytical results of Fat composition 1, Fat composition 2, Fat composition 3, Fat composition 4, Comparative fat composition 1 and Comparative fat composition 2 are shown in Table 1.

**Table 1: Analytical results of Fat composition 1, Fat composition 2, Fat composition 3, Fat composition 4, Comparative fat composition 1 and Comparative fat composition 2**

| | Fat composition 1 | Fat composition 2 | Fat composition 3 | Fat composition 4 | Comparative fat composition 1 | Comparative fat composition 2 |
|---|---|---|---|---|---|---|
| US-N10 | 36.3 | 30.8 | 86.5 | 31.5 | 40.0 | 34.2 |
| US-N20 | 12.0 | 12.4 | 49.4 | 11.2 | 6.5 | 24.7 |
| US-N25 | 5.7 | 9.1 | 16.4 | 8.0 | 2.4 | 21.3 |
| US-N30 | 3.6 | 7.3 | 9.2 | 5.6 | 1.4 | 15.7 |
| US-N35 | 2.2 | 5.5 | 4.9 | 4.2 | 0.5 | 11.7 |
| US-N40 | 0.5 | 3.7 | 1.4 | 2.1 | 0.1 | 8.4 |
| C8:0 | 0.0 | 0.0 | 0.0 | 0.0 | 0.0 | 0.1 |
| C10:0 | 0.0 | 0.0 | 0.0 | 0.0 | 0.0 | 0.0 |
| C12:0 | 0.2 | 0.3 | 0.0 | 0.2 | 0.2 | 0.6 |
| C14:0 | 0.1 | 0.1 | 0.1 | 0.1 | 0.1 | 0.2 |
| C16:0 | 3.6 | 4.0 | 25.6 | 4.8 | 3.5 | 4.6 |
| C16:1 | 0.1 | 0.1 | 0.3 | 0.1 | 0.1 | 0.1 |
| C17:0 | 0.1 | 0.1 | 0.2 | 0.1 | 0.1 | 0.1 |
| C18:0 | 42.8 | 42.5 | 36.5 | 41.6 | 43.0 | 42.1 |
| C18:1 | 45.1 | 45.0 | 32.8 | 45.3 | 44.9 | 44.5 |
| C18:2 | 5.8 | 5.8 | 2.8 | 5.7 | 6.0 | 5.6 |
| C18:3 | 0.4 | 0.4 | 0.1 | 0.2 | 0.2 | 0.2 |
| C20:0 | 1.4 | 1.4 | 1.1 | 1.3 | 1.5 | 1.4 |
| C20:1 | 0.1 | 0.1 | 0.0 | 0.2 | 0.3 | 0.3 |
| C22:0 | 0.1 | 0.1 | 0.2 | 0.1 | 0.1 | 0.1 |
| C24:0 | 0.1 | 0.1 | 0.1 | 0.1 | 0.1 | 0.1 |
| SAFA | 48.5 | 48.7 | 63.9 | 48.3 | 48.5 | 49.3 |
| MUFA | 45.3 | 45.1 | 33.1 | 45.6 | 45.2 | 44.8 |
| PUFA | 6.2 | 6.2 | 2.9 | 5.9 | 6.2 | 5.8 |
| IV FAME | 50.0 | 49.8 | 33.5 | 49.6 | 49.8 | 48.7 |
| TRANS | 0.1 | 0.2 | 0.2 | 0.2 | 0.2 | 0.3 |
| PPP | 0.0 | 0.0 | 0.6 | 0.0 | 0.0 | 0.0 |
| PPSt | 0.1 | 0.3 | 1.9 | 0.2 | 0.0 | 0.6 |
| POP | 0.4 | 0.5 | 14.4 | 0.7 | 0.1 | 0.8 |
| PLP | 0.5 | 0.5 | 1.5 | 0.5 | 0.4 | 0.5 |
| PStSt | 0.7 | 1.5 | 2.5 | 1.2 | 0.4 | 3.2 |
| POSt | 5.3 | 5.6 | 36.1 | 5.7 | 5.2 | 6.3 |
| POO | 2.7 | 2.9 | 3.1 | 3.3 | 2.5 | 3.4 |
| PLSt | 1.3 | 1.2 | 3.0 | 1.2 | 1.3 | 0.9 |
| PLO | 0.8 | 0.8 | 0.5 | 1.0 | 0.7 | 0.8 |
| PLL | 0.2 | 0.2 | 0.1 | 0.2 | 0.2 | 0.1 |
| StStSt | 2.2 | 4.0 | 1.2 | 2.9 | 1.4 | 7.7 |
| StOSt | 36.5 | 32.9 | 25.5 | 34.4 | 38.8 | 25.3 |
| StOO | 28.7 | 27.0 | 4.1 | 27.3 | 28.3 | 25.2 |
| StLSt | 3.3 | 3.6 | 1.5 | 3.7 | 4.4 | 2.5 |
| OOO | 6.0 | 6.8 | 0.7 | 6.6 | 5.4 | 8.7 |
| StLO | 5.1 | 5.5 | 0.6 | 4.8 | 5.0 | 6.1 |
| OLO | 1.6 | 2.1 | 0.2 | 1.9 | 1.3 | 3.1 |
| StLL | 0.7 | 0.5 | 0.0 | 0.7 | 0.8 | 0.3 |
| OLL | 0.0 | 0.2 | 0.0 | 0.0 | 0.0 | 0.3 |
| AStSt | 0.1 | 0.2 | 0.1 | 0.6 | 0.1 | 0.7 |
| AOSt | 1.6 | 1.6 | 1.1 | 1.7 | 1.8 | 1.5 |
| AOO | 1.3 | 1.2 | 0.2 | 1.3 | 1.3 | 1.0 |
| ALSt | 0.2 | 0.2 | 0.1 | 0.1 | 0.2 | 0.1 |
| SSS | 3.1 | 6.0 | 6.3 | 4.9 | 1.9 | 12.2 |
| UUU | 7.6 | 9.1 | 0.9 | 8.5 | 6.7 | 12.1 |
| S2U | 49.1 | 46.1 | 83.2 | 48.0 | 52.2 | 37.9 |
| SU2 | 39.5 | 38.1 | 8.6 | 38.6 | 38.8 | 36.9 |
| Weight ratio of S2U/SSS | 15.8 | 7.7 | 13.2 | 9.8 | 27.5 | 3.1 |
| S2O | 43.8 | 40.6 | 77.1 | 42.5 | 45.9 | 33.9 |
| S2L | 5.3 | 5.5 | 6.1 | 5.5 | 6.3 | 4.0 |
| Weight ratio of S2O/S2L | 8.3 | 7.4 | 12.6 | 7.7 | 7.3 | 8.5 |
| SN-2 of SAFA% | 9.6 | 17.9 | 7.1 | 13.7* | 5.8 | 33.4 |
| Diglyceride | 7.0 | 7.2 | 2.8 | 7.1** | 6.7 | 8.0 |

| | | | | | | |
|---|---|---|---|---|---|---|
| *calculated based on SN-2 of SAFA of 100% shea butter (comparative fat composition 1) and 100% interesterified shea butter (comparative fat composition 2) **calculated based on the diglyceride contents of 100% shea butter (comparative fat composition 1) and 100% interesterified shea butter (comparative fat composition 2) | | | | | | |

Four additional fat compositions according to the invention were produced by partial interesterification. 100 g refined shea butter was prepared in a glass bottle at 60°C mixed under rotation speed of 250 rpm. The reaction was catalyzed by 2% by weight of immobilized lipase originating from *Thermomyces lanuginosus* immobilized on silica support (Lipozyme^{®} TL-IM). The reaction was stopped after 2 hours and the reacted fat composition was obtained after filtration. The same reaction was repeated but the reaction was then stopped after 3 hours, 6 hours and 7 hours respectively. Fat composition 5 is the fat product after reaction with a reaction time of 2 hours; Fat composition 6 is the fat product after reaction with a reaction time of 3 hours; Fat composition 7 is the fat product after reaction with a reaction time of 6 hours; and Fat composition 8 is the fat product after reaction with a reaction time of 7 hours.

The analytical results of Fat composition 5, Fat composition 6, Fat composition 7 and Fat composition 8 are shown in Table 2.

**Table 2: Analytical results of Fat composition 5, Fat composition 6, Fat composition 7 and Fat composition 8**

| | Fat composition 5 | Fat composition 6 | Fat composition 7 | Fat composition 8 |
|---|---|---|---|---|
| US-N10 | 37.5 | 34.9 | 29.8 | 29.9 |
| US-N20 | 12.9 | 11.9 | 12.6 | 12.9 |
| US-N25 | 6.1 | 7.4 | 10.0 | 10.7 |
| US-N30 | 4.6 | 5.5 | 6.6 | 7.1 |
| US-N35 | 3.7 | 4.7 | 5.6 | 6.0 |
| US-N40 | 1.0 | 1.8 | 3.5 | 3.8 |
| C8:0 | 0.0 | 0.0 | 0.0 | 0.0 |
| C10:0 | 0.0 | 0.0 | 0.0 | 0.0 |
| C12:0 | 0.2 | 0.2 | 0.2 | 0.2 |
| C14:0 | 0.1 | 0.1 | 0.1 | 0.1 |
| C16:0 | 3.5 | 3.5 | 3.5 | 3.5 |
| C16:1 | 0.1 | 0.1 | 0.1 | 0.1 |
| C17:0 | 0.1 | 0.1 | 0.1 | 0.1 |
| C18:0 | 43.0 | 43.0 | 43.0 | 43.0 |
| C18:1 | 44.9 | 44.9 | 44.9 | 44.9 |
| C18:2 | 6.0 | 6.0 | 6.0 | 6.0 |
| C18:3 | 0.2 | 0.2 | 0.2 | 0.2 |
| C20:0 | 1.5 | 1.5 | 1.5 | 1.5 |
| C20:1 | 0.3 | 0.3 | 0.3 | 0.3 |
| C22:0 | 0.1 | 0.1 | 0.1 | 0.1 |
| C24:0 | 0.1 | 0.1 | 0.1 | 0.1 |
| SAFA | 48.5 | 48.5 | 48.5 | 48.5 |
| MUFA | 45.2 | 45.2 | 45.2 | 45.2 |
| PUFA | 6.2 | 6.2 | 6.2 | 6.2 |
| IV FAME | 49.8 | 49.8 | 49.8 | 49.8 |
| TRANS | 0.2 | 0.2 | 0.2 | 0.2 |
| PPP | 0.0 | 0.0 | 0.0 | 0.0 |
| PPSt | 0.1 | 0.1 | 0.1 | 0.2 |
| POP | 0.2 | 0.1 | 0.0 | 0.1 |
| PLP | 0.4 | 0.3 | 0.3 | 0.3 |
| PStSt | 0.6 | 0.7 | 1.1 | 1.4 |
| POSt | 5.1 | 5.1 | 5.1 | 5.1 |
| POO | 2.5 | 2.6 | 2.6 | 2.6 |
| PLSt | 1.3 | 1.2 | 1.0 | 1.0 |
| PLO | 0.8 | 0.7 | 0.7 | 0.7 |
| PLL | 0.2 | 0.1 | 0.1 | 0.1 |
| StStSt | 2.4 | 2.6 | 4.0 | 4.2 |
| StOSt | 35.9 | 36.0 | 33.7 | 33.0 |
| StOO | 28.4 | 28.3 | 28.1 | 27.9 |
| StLSt | 3.9 | 4.1 | 3.9 | 3.7 |
| OOO | 6.1 | 6.3 | 7.0 | 7.2 |
| StLO | 5.5 | 5.5 | 6.0 | 6.0 |
| OLO | 1.7 | 1.8 | 2.1 | 2.3 |
| StLL | 0.7 | 0.6 | 0.5 | 0.6 |
| OLL | 0.3 | 0.2 | 0.2 | 0.2 |
| AStSt | 0.2 | 0.2 | 0.3 | 0.4 |
| AOSt | 1.7 | 1.8 | 1.7 | 1.6 |
| AOO | 1.3 | 1.3 | 1.1 | 1.2 |
| ALSt | 0.2 | 0.2 | 0.1 | 0.2 |
| SSS | 3.3 | 3.6 | 5.5 | 6.2 |
| UUU | 8.1 | 8.3 | 9.3 | 9.7 |
| S2U | 48.7 | 48.8 | 45.8 | 45.0 |
| SU2 | 39.4 | 39.1 | 39.1 | 39.1 |
| Weight ratio of S2U/SSS | 14.8 | 13.6 | 8.3 | 7.3 |
| S2O | 42.9 | 43.0 | 40.5 | 39.8 |
| S2L | 5.8 | 5.8 | 5.3 | 5.2 |
| Weight ratio of S2O/S2L | 7.4 | 7.4 | 7.6 | 7.7 |
| Diglyceride | 7.1 | 7.5 | 7.4 | 7.7 |

It is observed that Fat composition 5 and Fat composition 6 have considerably similar composition to Fat composition 1 and Fat composition 7, and Fat composition 8 has considerably similar composition to Fat composition 2, despite the differing processes used to produce these Fat compositions 5 to 8 compared to Fat compositions 1 and 2. In addition, Fat composition 5 has a SN-2 of SAFA% of 8.3% and Fat composition 6 has a SN-2 of SAFA% of 9.1% which are also close to that of Fat composition 1. It is concluded that the fat composition according to the invention can be obtained by different processes in order to achieve the desired technical effects. As demonstrated herein, partial interesterification provides an alternative advantageous process route to produce the fat composition to be used in the water-in-oil emulsion according to the invention. This process route is more efficient and simplified compared to a process involving the blending of different fat components.

### Example 2 - Preparation of the fat blends by using the prepared fat compositions

The fat blends used to prepare the spreadable emulsion products were prepared by using the prepared fat compositions. Fat blend 1 was prepared by blending 71.0% by weight of Fat composition 1, 22.3% by weight of rapeseed oil and 6.7% by weight of coconut oil. Fat blend 2 was prepared by blending 71.0% by weight of Fat composition 2, 22.3% by weight of rapeseed oil and 6.7% by weight of coconut oil. Fat blend 3 was prepared by blending 55.0% by weight of Fat composition 3 and 45.0% by weight of rapeseed oil. Fat blend 4 was prepared by blending 37.1% by weight of Fat composition 4 and 62.9% rapeseed oil.

Comparative fat blend 1 was prepared by blending 71.0% by weight of Comparative fat composition 1, 22.3% by weight of rapeseed oil and 6.7% by weight of coconut oil. Comparative fat blend 2 was prepared by blending 71.0% by weight of Comparative fat composition 2, 22.3% by weight of rapeseed oil and 6.7% by weight of coconut oil. Comparative fat blend 3 was prepared by blending 51.2% by weight of Comparative fat composition 1 and 48.8% by weight of rapeseed oil. Reference fat blend 1 was prepared according to EP-A-3 245 876 by blending 20% by weight of interesterified cocoa butter and 80% by weight of soybean oil.

The analytical results of Fat blend 1, Fat blend 2, Fat blend 3, Fat blend 4, Comparative fat blend 1, Comparative fat blend 2, Comparative fat blend 3 and Reference fat blend 1 are shown in Table 3.

**Table 3: Analytical results of Fat blend 1, Fat blend 2, Fat blend 3, Fat blend 4, Comparative fat blend 1, Comparative fat blend 2, Comparative fat blend 3 and Reference fat blend 1**

| | Fat blend 1 | Fat blend 2 | Fat blend 3 | Fat blend 4 | Comparative fat blend 1 | Comparative fat blend 2 | Comparative fat blend 3 | Reference fat blend 1 |
|---|---|---|---|---|---|---|---|---|
| US-N10 | 29.7 | 19.9 | 42.3 | 13.3 | 29.1 | 32.0 | 19.7 | * |
| US-N20 | 15.3 | 11.3 | 15.9 | 5.9 | 16.2 | 23.9 | 9.5 | * |
| US-N25 | 5.4 | 7.6 | 6.1 | 3.4 | 3.6 | 17.1 | 2.2 | * |
| US-N30 | 2.8 | 5.3 | 3.8 | 2.1 | 1.3 | 12.4 | 1.1 | * |
| US-N35 | 1.6 | 3.5 | 1.6 | 1.0 | 0.2 | 8.6 | 0.6 | * |
| US-N40 | 0.7 | 1.7 | 0.1 | 0.7 | 0.2 | 5.5 | 0.0 | * |
| C8:0 | 0.4 | 0.4 | 0.0 | 0.0 | 0.5 | 0.4 | 0.0 | 0.0 |
| C10:0 | 0.4 | 0.4 | 0.0 | 0.0 | 0.4 | 0.4 | 0.0 | 0.0 |
| C12:0 | 3.4 | 3.5 | 0.0 | 0.1 | 3.8 | 3.3 | 0.0 | 0.0 |
| C14:0 | 1.5 | 1.5 | 0.1 | 0.1 | 1.6 | 1.4 | 0.1 | 0.1 |
| C16:0 | 5.5 | 5.4 | 16.1 | 4.7 | 5.2 | 5.7 | 4.4 | 14.0 |
| C16:1 | 0.1 | 0.1 | 0.2 | 0.2 | 0.1 | 0.1 | 0.2 | 0.1 |
| C17:0 | 0.1 | 0.1 | 0.1 | 0.1 | 0.1 | 0.1 | 0.1 | 0.1 |
| C18:0 | 29.5 | 29.5 | 20.8 | 15.8 | 29.5 | 29.3 | 21.7 | 11.0 |
| C18:1 | 46.0 | 46.4 | 46.7 | 56.5 | 45.3 | 46.4 | 54.3 | 24.8 |
| C18:2 | 9.0 | 8.8 | 10.2 | 14.6 | 8.8 | 8.8 | 12.6 | 42.7 |
| C18:3 | 2.1 | 2.0 | 3.7 | 5.5 | 2.0 | 2.0 | 4.3 | 5.5 |
| C20:0 | 1.2 | 1.1 | 0.8 | 0.8 | 1.1 | 1.1 | 1.0 | 0.6 |
| C20:1 | 0.5 | 0.5 | 0.5 | 0.9 | 0.5 | 0.4 | 0.7 | 0.4 |
| C22:0 | 0.2 | 0.2 | 0.3 | 0.3 | 0.2 | 0.2 | 0.2 | 0.4 |
| C24:0 | 0.1 | 0.1 | 0.1 | 0.1 | 0.1 | 0.1 | 0.1 | 0.1 |
| SAFA | 42.2 | 42.1 | 38.3 | 21.9 | 42.3 | 42.0 | 27.6 | 26.3 |
| MUFA | 46.6 | 47.0 | 47.6 | 57.7 | 45.9 | 47.0 | 55.3 | 25.3 |
| PUFA | 11.1 | 10.8 | 13.9 | 20.1 | 10.8 | 10.8 | 16.9 | 48.2 |
| IV FAME | 61.1 | 60.8 | 68.2 | 89.3 | 59.9 | 60.9 | 80.6 | 110.1 |
| TRANS | 0.3 | 0.3 | 0.4 | 0.4 | 0.2 | 0.3 | 0.3 | 0.7 |
| CN26 | 0.0 | 0.1 | 0.0 | 0.0 | 0.0 | 0.0 | 0.0 | 0.0 |
| CN28 | 0.1 | 0.5 | 0.1 | 0.1 | 0.1 | 0.5 | 0.3 | 0.0 |
| CN30 | 1.5 | 1.0 | 0.5 | 0.8 | 1.5 | 0.9 | 1.2 | 0.3 |
| CN32 | 0.8 | 0.9 | 0.1 | 0.1 | 0.8 | 0.9 | 0.1 | 0.0 |
| CN34 | 1.3 | 1.3 | 0.1 | 0.2 | 1.2 | 1.3 | 0.2 | 0.0 |
| CN36 | 1.7 | 1.7 | 0.2 | 0.2 | 1.7 | 1.7 | 0.2 | 0.1 |
| CN38 | 1.5 | 1.6 | 0.1 | 0.1 | 1.6 | 1.5 | 0.2 | 0.1 |
| CN40 | 1.1 | 1.1 | 0.0 | 0.1 | 1.1 | 0.9 | 0.1 | 0.0 |
| CN42 | 3.7 | 3.5 | 0.0 | 1.3 | 3.7 | 3.1 | 1.8 | 0.0 |
| CN44 | 0.7 | 0.6 | 0.1 | 0.2 | 0.7 | 0.6 | 0.2 | 0.0 |
| CN46 | 0.4 | 0.4 | 0.1 | 0.1 | 0.4 | 0.4 | 0.1 | 0.0 |
| CN48 | 0.7 | 0.8 | 0.7 | 0.7 | 0.8 | 1.0 | 0.7 | 0.7 |
| CN50 | 1.9 | 1.6 | 10.6 | 1.5 | 2.1 | 1.5 | 1.5 | 5.9 |
| CN52 | 10.7 | 11.8 | 30.8 | 13.4 | 10.3 | 13.2 | 12.3 | 30.0 |
| CN54 | 69.3 | 69.0 | 53.1 | 76.9 | 69.5 | 68.5 | 76.6 | 60.2 |
| CN56 | 3.8 | 3.7 | 2.9 | 4.2 | 3.8 | 3.5 | 4.0 | 1.7 |
| CN58 | 0.5 | 0.4 | 0.6 | 0.0 | 0.4 | 0.5 | 0.6 | 0.8 |

### Example 3 - Production and recipe of spreadable emulsion products containing around 80% fat

Spreadable emulsion products (Product 1, Product 2, Product 3, Comparative product 1 and Comparative product 2 as listed in Table 4) were prepared in pilot scale.

**Table 4 - Overview of spreadable emulsion products containing around 80% fat**

| | | | | | |
|---|---|---|---|---|---|
| Product | Product 1 | Product 2 | Product 3 | Comparative product 1 | Comparative product 2 |
| Fat blend | Fat blend 1 | Fat blend 2 | Fat blend 3 | Comparative fat blend 1 | Comparative fat blend 2 |
| Fat composition (hardstock) | Fat composition 1 | Fat composition 2 | Fat composition 3 | Comparative fat composition 1 | Comparative fat composition 2 |

The first step of preparing emulsion products was the preparation of a fat-soluble ingredients mixture and a water-soluble ingredients mixture. Recipes of spreadable emulsion products are presented in Table 5. Fat-soluble ingredients were fat blend, sunflower lecithin, butter flavor and beta-carotene. Water-soluble ingredients were water, buttermilk powder, salt and citric acid.

**Table 5 - Recipe of spreadable emulsion products containing around 80% fat**

| Ingredient | Spreadable emulsion product |
|---|---|
| Fat blend | 82% |
| Sunflower lecithin | 0.3% |
| Butter flavor | 0.015% |
| Beta-carotene | 0.003% |
| Water | 16.667% |
| Buttermilk powder | 0.50% |
| Salt | 0.50% |
| Citric acid | 0.015% |

Fat phase and aqueous phases were pasteurized separately before making the emulsion. The emulsion was formed by mixing the heated water mixture (55°C) to the heated fat mixture (60°C) in an emulsion tank. Spreadable emulsion products were prepared using a Gerstenberg & Agger pilot perfector with process setup containing 3 chilling tubes, including an additional intermediate crystallizer after two of the three chilling tubes, and a resting tube. Spreadable emulsion products were packed in bricks after the resting tube. Production speed and cooling settings were kept constant for all products. Production speed was 45 kg / hour and crystallizers scraping blades speed was 352 rpm. Five spreadable emulsion products were obtained and stored at 5 °C.

### Example 4 - Evaluation of spreadable emulsion products (Product 1, Product 2, Comparative product 1 and Comparative product 2) performance in the process

The degree of spreadable emulsions fats crystallization in the pilot perfector process depends on the residence time and the rotational speed of the scraped surface blades as well as the crystallization rate of the fat. In order to compare the performance of all the products ((Product 1, Product 2, Comparative product 1 and Comparative product 2) and resulting product characteristics, pilot settings were kept constant. It was observed that Product 1 and Product 2 had the same desired cooling rate corresponding to the crystallization behavior in the process. However, Comparative products had either too fast (Comparative product 1) or too slow (Comparative product 2) cooling rate in the process, showing the unfavorable crystallization behavior which could result in poor sensory characteristics.

If the cooling rate is too slow and too much crystallization takes place early in the process, such as in the case of Comparative product 2, the shearing forces of processing become so excessive that they break down the structure which results in undesired appearance and organoleptic properties such as brittleness. On the other hand, if the cooling rate is too fast and proper crystallization is not achieved during the process, such as in the case of Comparative product 1, uncontrolled crystallization takes place in the obtained emulsion product after packaging and during shelf life which results in undesirable sensory characteristics such as post-hardening, unpredictable texture and graininess tendency. It is believed that the crystallization behavior in the process strongly relates to the triglyceride composition and corresponding properties of the fat composition used in the fat blend, and eventually used in the water-in-oil emulsion product.

### Example 5 - Evaluation of spreadable emulsion products (Product 1, Product 2, Comparative product 1 and Comparative product 2)

It was observed by a taste panel (n=11) that Product 1 and Product 2 had significantly less brittleness compared to Comparative product 2 while the pronounced brittleness such as in Comparative product 2 caused poor sensory characteristics. It was also indicated that the crystal networks formed in Product 1 and Product 2 are particularly favorable, which is in line with the observations during the production as mentioned in Example 4. In addition, it was acknowledged by the taste panel that Product 1 and Product 2 had significantly better melting behavior while the melting of Comparative product 2 was unpleasantly slow in mouth. In addition to poor melting behavior, Comparative product 2 had significantly lower hardness compared to Product 1 and Product 2, making it sticky in mouth and giving no melting sensation.

Differences in hardness, plasticity and melting in mouth were observed between Comparative product 1 and Product 1. Product 1 was less hard, had less plasticity and was faster melting in mouth. Plasticity is a negative attribute for buttery melting products, indicating slower melting, and the results of melting in mouth confirmed that Product 1 had better sensory characteristics as Comparative Product 1.

The texture property was also determined by measuring the hardness. The spreadable emulsion products were stored at 4°C for 3 days. Then, hardness was measured using the Brookfield texture analyzer (probe TA40 and penetration depth of 5 mm at 2 mm/sec) of (i) the products directly out of the storage, and (ii) stabilized for 45 minutes at 20°C following removal from storage, respectively. The maximal force measured in compression was recorded and mentioned as hardness. Each product was measured 3 times and the average results are shown in Table 6.

**Table 6 - Hardness of Product 1, Product 2, Comparative product 1 and Comparative product 2 after stored at 4°C for 3 days**

| Hardness (g) | Product 1 | Product 2 | Comparative product 1 | Comparative product 2 |
|---|---|---|---|---|
| Directly out of the storage | 930 | 839 | 950 | 464 |
| Stabilized for 45 minutes at 20°C after removal from storage | 812 | 777 | 891 | 451 |
| Percentage of hardness reduction after stabilization | 12.7% | 7.4% | 6.2% | 2.8% |

It was observed that the Comparative products had lower hardness than Product 1 and Product 2. When samples were stabilized at room temperature for 45 minutes, Comparative product 2 showed the smallest change (2.8% lower measured hardness compared to starting value 464 g) indicating also bad melting behavior and poor sensory characteristics.

It was further observed that Comparative product 1 had the highest hardness after storage, which is not desired, and the hardness of Comparative product 1 after stabilization at room temperature remained high. Product 1 and Product 2 were softer when cold and they also changed more after storage for 45 minutes at room temperature, hardness reduced 12.7% and 7.4% respectively, showing good melting behavior as essential sensory characteristics of spreadable emulsion products.

### Example 6 - Evaluation of spreadable emulsion product (Product 3)

The obtained product (Product 3) was softer than Product 1 and Product 2 which makes it also easier to spread. Product 3 had very good melting behavior which could be easily seen when comparing it to Comparative product 2. Product 3 and comparative product 2 had comparable hardness in sensory evaluation, but Product 3 had significantly better melting characteristics.

The texture property was also determined by measuring the hardness. The spreadable emulsion product, Product 3, was stored at 4°C for 3 days. Then, hardness was measured using the Brookfield texture analyzer (probe TA40 and penetration depth of 5 mm at 2 mm/sec) of the products (i) directly out of the storage, and (ii) stabilized for 45 minutes at 20°C following removal from storage, respectively. The maximal force measured in compression was recorded and mentioned as hardness. The product was measured 3 times and the average results are shown in Table 7.

**Table 7 - Hardness of Product 3 after stored at 4°C for 3 days**

| Hardness (g) | Product 3 |
|---|---|
| Directly out of the storage | 580 |
| Stabilized for 45 minutes at 20°C taken out from the storage | 519 |
| Percentage of hardness reduction after stabilization | 10.5% |

It was observed that Product 3 had desirable hardness to be used as a spread after stabilization at room temperature. Also, the hardness of Product 3 properly reduced after storage for 45 minutes at room temperature, thereby demonstrating good melting properties.

### Example 7 - Production and recipe of spreadable emulsion products containing around 60% fat

Spreadable emulsion products (Product 4 and Comparative product 3 as listed in Table 8) were produced at pilot scale.

**Table 8 - Overview of spreadable emulsion products containing around 60% fat**

| | | |
|---|---|---|
| Product | Product 4 | Comparative product 3 |
| Fat blend | Fat blend 4 | Comparative fat blend 3 |
| Fat composition (hardstock) | Fat composition 4 | Comparative fat composition 1 |

The first step of preparing emulsions was the preparation of a fat-soluble ingredients mixture and a water-soluble ingredients mixture. Recipes of spreadable emulsion products are presented in Table 9. Fat-soluble ingredients were fat blend and mono- and diglycerides. Water-soluble ingredients were water, salt and citric acid.

**Table 9 - Recipe of spreadable emulsion products containing around 60% fat**

| Ingredient | Spreadable emulsion product |
|---|---|
| Fat blend | 56.65% |
| Mono- and diglycerides of fatty acids | 0.3% |
| Water | 42.52% |
| Salt | 0.5% |
| Citric acid | 0.03% |

Fat phase (at 60°C) and aqueous phase (at 55°C) were mixed to form the emulsion. The emulsion was pasteurized (78°C) and after pasteurization cooled down to 50°C. Spreadable emulsion products were prepared using a Gerstenberg & Schröder pilot perfector with process setup containing 3 chilling tubes. After the second chilling tube was one additional intermediate crystallizer. Spreadable emulsion products were packed in tubs. Production speed and cooling settings were kept constant for both products. Production speed was 100 kg / hour and crystallizers scraping blades speed was 1000 rpm. Two spreadable emulsion products were obtained and stored at 5 °C.

### Example 8 - Evaluation of spreadable emulsion products (Product 4 and Comparative product 3) performance in the process

The degree of spreadable emulsions fats crystallization in the pilot perfector process depends on the residence time, cooling capacity and the rotational speed of the scraped surface blades as well as the crystallization rate of the fat. To compare the performance of the products (Product 4 and Comparative product 3) and resulting product characteristics, pilot settings were kept constant. Comparative product 3 had too slow crystallization behavior which can result in poor sensory characteristics.

If the cooling rate is too fast and proper crystallization is not achieved during the process such as in the case of Comparative product 3, uncontrolled crystallization takes place in the obtained emulsion product after packaging and during shelf life which results in undesirable sensory characteristics such as post-crystallization, unpredictable texture and graininess tendency. It is believed that the crystallization behavior in the process strongly relates to the triglyceride composition and corresponding properties of the fat composition used in the fat blend, and eventually used in the water-in-oil emulsion product.

### Example 9 - Evaluation of spreadable emulsion products (Product 4 and Comparative product 3)

Product 4 and Comparative sample 3 were both solid at 5°C. It was observed by the taste panel that Product 4 showed considerably better spreadability and melting characteristics than Comparative sample 3. This indicates better crystallization in the product with a homogeneous fat crystal structure, which leads to improved sensory characteristics. Moreover, Comparative sample 3 demonstrated post-crystallization behavior which causes undesirable sandiness and graininess. Therefore, Product 4 was clearly appreciated and preferred in view of the improved sensory characteristics.

## Claims

1. A fat composition, comprising:
at least 30% by weight of stearic acid (C18:0); and
at least 45% by weight of saturated fatty acid (SAFA);
said percentages of acid referring to acids bound as acyl groups in glycerides in the fat composition and being based on the total weight of C8 to C24 fatty acids;
and wherein the fat composition comprises from 1.0% to 8.0% by weight of SSS triglycerides and at most 10.0% by weight of UUU triglycerides, based on the total triglycerides present in the fat composition;
and wherein the fat composition has a weight ratio of S2U triglycerides to SSS triglycerides of from 6.0 to 20.0 and a weight ratio of S2O triglycerides to S2L triglycerides of at most 30.0, wherein S is saturated fatty acid, U is unsaturated fatty acid, O is oleic acid and L is linoleic acid.

2. Fat composition according to Claim 1, wherein the fat composition has a percentage of saturated fatty acid on the second position of triglyceride out of total saturated fatty acid (Sn-2 of SAFA%) of from 6.0% to 25.0%, preferably from 6.0% to 22.0%, more preferably from 6.5% to 20.0% and even more preferably from 7.0% to 19.0%.

3. Fat composition according to Claim 1 or Claim 2, wherein the fat composition comprises:
at most 5% by weight of lauric acid (C12:0), preferably from 0% to 4% by weight, more preferably from 0% to 3% by weight and even more preferably from 0% to 2% by weight; and/or
at most 30% by weight of palmitic acid (C16:0), preferably from 0% to 29% by weight, more preferably from 1% to 28% by weight and even more preferably from 2% to 27% by weight; and/or
from 30% to 60% by weight of stearic acid (C18:0), preferably from 31% to 55% by weight, more preferably from 32% to 52% by weight and even more preferably from 33% to 50% by weight; and/or
from 20% to 55% by weight of oleic acid (C18:1), preferably from 23% to 53% by weight, more preferably from 25% to 50% by weight and even more preferably from 28% to 48%; and/or
from 45% to 80% by weight of saturated fatty acid (SAFA), preferably from 45% to 75% by weight, more preferably from 45% to 70% by weight and even more preferably from 46% to 65%;
said percentages of acid referring to acids bound as acyl groups in glycerides in the fat composition and being based on the total weight of C8 to C24 fatty acids.

4. Fat composition according to any of the preceding claims, wherein the fat composition has an iodine value of from 25 to 60, preferably from 28 to 55, more preferably from 30 to 53 and even more preferably from 31 to 52.

5. Fat composition according to any of the preceding claims, wherein the fat composition comprises:
from 1.5% to 7.5% by weight of SSS triglycerides, preferably from 2.0% to 7.0% by weight, more preferably from 2.3% to 6.8% by weight and even more preferably from 2.5% to 6.5% by weight; and/or
from 0.1% to 9.9% by weight of UUU triglycerides, preferably from 0.2% to 9.8% by weight, more preferably from 0.3% to 9.7% by weight and even more preferably from 0.5% to 9.5% by weight; and/or
from 20.0% to 95.0% by weight of S2U triglycerides, preferably from 25.0% to 90.0% by weight, more preferably from 30.0% to 88.0% by weight and even more preferably from 35.0% to 85.0% by weight; and/or
from 2.0% to 50.0% by weight of SU2 triglycerides, preferably from 4.0% to 45.0% by weight, more preferably from 5.0% to 42.0% by weight and even more preferably from 6.0% to 41.0% by weight;
based on the total triglycerides present in the fat composition, wherein S is saturated fatty acid and U is unsaturated fatty acid.

6. Fat composition according to one of the preceding claims, wherein the fat composition has a weight ratio of S2U triglycerides to SSS triglycerides from 6.5 to 19.0, preferably from 6.5 to 18.0, more preferably from 7.0 to 17.0 and even more preferably from 7.0 to 16.0; based on the total triglycerides present in the fat composition, wherein S is saturated fatty acid and U is unsaturated fatty acid.

7. Fat composition according to any of the preceding claims, wherein the fat composition comprises:
from 30.0% to 85.0% by weight of S2O triglycerides, preferably from 32.0% to 82.0% by weight, more preferably from 35.0% to 80.0% by weight and even more preferably from 38.0% to 80.0 by weight; and/or
from 0.0% to 20.0% by weight of S2L triglycerides, preferably from 1.0% to 15.0% by weight, more preferably from 2.0% to 12.0% by weight and even more preferably from 3.0% to 10.0% by weight;
based on the total triglycerides present in the fat composition, wherein S is saturated fatty acid, O is oleic acid and L is linoleic acid.

8. Fat composition according to any of the preceding claims, wherein the fat composition has a weight ratio of S2O triglycerides to S2L triglycerides from 1.0 to 25.0, preferably from 1.5 to 20.0, more preferably from 2.0 to 18.0 and even more preferably from 2.5 to 15.0; based on the total triglycerides present in the fat composition, wherein S is saturated fatty acid, O is oleic acid and L is linoleic acid.

9. Fat composition according to any of the preceding claims, wherein the fat composition has:
from 20.0 to 95.0 solid fat content at 10°C, preferably from 23.0 to 93.0, more preferably from 25.0 to 91.0 and even more preferably from 28.0 to 89.0; and/or
from 5.0 to 65.0 solid fat content at 20°C, preferably from 6.0 to 60.0, more preferably from 8.0 to 55.0 and even more preferably from 10.0 to 52.0; and/or
from 2.5 to 20.0 solid fat content at 25°C, preferably from 3.0 to 19.0, more preferably from 4.0 to 18.0 and even more preferably from 4.5 to 17.5; and/or
from 1.5 to 15.0 solid fat content at 30°C, preferably from 2.0 to 13.0, more preferably from 2.5 to 11.0 and even more preferably from 3.0 to 10.0; and/or
at most 10.0 solid fat content at 35°C, preferably from 1.0 to 9.0, more preferably from 1.5 to 8.0 and even more preferably from 2.0 to 7.0; and/or
at most 7.0 solid fat content at 40°C, preferably at most 6.0, more preferably from 0.1 to 5.5 and even more preferably from 0.3 to 5.0;
measured on unstabilized fat according to ISO 8292-1.

10. Process for making a fat composition of any of the preceding claims, which comprises blending a non-interesterified fat or oil and an interesterified fat or oil wherein the fat or oil is selected from a group consisting of cocoa butter, shea butter, illipe butter, sal butter, kokum fat, mango fat, high stearic sunflower oil, high stearic soybean oil, high stearic rapeseed oil, high stearic canola oil, allanblackia fat, pentadesma fat, sonchy fat, fraction thereof and mixture thereof, wherein the weight ratio of the non-interesterfied fat or oil to the interesterified fat or oil is at least 1.0, preferably from 1.1 to 20.0, more preferably from 1.1 to 15.0 and even more preferably from 1.2 to 10.0.

11. Process for making a fat composition of any of Claims 1 to 9, wherein a fat or oil selected from a group consisting of cocoa butter, shea butter, illipe butter, sal butter, kokum fat, mango fat, high stearic sunflower oil, high stearic soybean oil, high stearic rapeseed oil, high stearic canola oil, allanblackia fat, pentadesma fat, sonchy fat, fraction thereof and mixture thereof is partially interesterified, carried out by using from 0.1% to 10% by weight of a lipase, preferably from 0.5% to 5% by weight; at a temperature of from 50°C to 80°C, preferably from 55°C to 70°C; and for a period of time of from 0.5 hours to 12 hours, preferably from 1 hour to 8 hours.

12. A fat blend comprising:
from 5% to 95% by weight of the fat composition of any one of Claims 1 to 9, preferably from 10% to 90% by weight, more preferably from 15% to 85% by weight, even more preferably from 20% to 80% by weight and most preferably from 25% to 75% by weight; and
from 5% to 95% by weight of an oil selected from a group consisting of coconut oil, sunflower oil, high oleic sunflower oil, high oleic rapeseed oil, high oleic canola oil, high oleic soybean oil, rapeseed oil, rice oil, soybean oil, cottonseed oil, chia oil, flaxseed oil, corn oil, safflower oil, olive oil, canola oil, grapeseed oil, pumpkin oil, sesame oil, walnut oil, hazelnut oil, fraction thereof and mixture thereof, preferably from 10% to 90% by weight, more preferably from 15% to 85% by weight, even more preferably from 20% to 80% by weight and most preferably from 25% to 75% by weight;
wherein the fat blend has from 8.0 to 55.0 solid fat content at 10°C, from 2.0 to 30.0 solid fat content at 20°C, at most 15.0 solid fat content at 25°C, at most 10.0 solid fat content at 30°C, at most 8.0 solid fat content at 35°C, and at most 5.0 solid fat content at 40°C; measured on unstabilized fat according to ISO 8292-1; and
wherein the fat blend comprises from 12.0% to 50.0% by weight of stearic acid (C18:0), from 30.0% to 70.0% by weight of oleic acid (C18:1), and from 5.0% to 30.0% by weight of linoleic acid (C18:2); said percentage of acid referring to acids bound as acyl groups in glycerides in the fat blend and being based on the total weight of C8 to C24 fatty acids.

13. Fat blend according to Claim 12, wherein the fat blend has:
from 9.0 to 50.0 solid fat content at 10°C, preferably from 10.0 to 48.0, more preferably from 11.0 to 45.0 and most preferably from 17.0 to 44.0; and/or
from 3.0 to 25.0 solid fat content at 20°C, preferably from 3.5 to 22.0, more preferably from 4.0 to 20.0 and most preferably from 11.0 to 18.0; and/or
from 1.0 to 12.0 solid fat content at 25°C, preferably from 2.0 to 10.0 and more preferably from 2.5 to 9.0; and/or
at most 8.0 solid fat content at 30°C, preferably from 0.5 to 7.0, more preferably from 1.0 to 6.0 and most preferably from 1.5 to 4.5; and/or
at most 7.0 solid fat content at 35°C, preferably from 0.5 to 6.0, more preferably from 0.5 to 5.0 and most preferably from 1.0 to 2.5; and/or
at most 4.0 solid fat content at 40°C, preferably at most 3.0 and more preferably from 0.1 to 2.5;
measured on unstabilized fat according to ISO 8292-1.

14. Fat blend according to Claim 12 or 13, wherein the fat blend comprises:
from 14.0% to 45.0% by weight of stearic acid (C18:0) and preferably from 15.0% to 35.0% by weight; and/or
from 35.0% to 65.0% by weight of oleic acid (C18:1) and preferably from 45.5% to 60.0% by weight; and/or
from 7.0% to 25.0% by weight of linoleic acid (C18:2) and preferably from 8.6% to 20.0% by weight; said percentage of acid referring to acids bound as acyl groups in glycerides in the fat blend and being based on the total weight of C8 to C24 fatty acids.

15. Fat blend according to Claims 12 to 14, wherein the fat blend has an iodine value of from 40 to 95, preferably from 45 to 93, more preferably from 50 to 92 and even more preferably from 55 to 91.
